# EUROPEAN PATENT SPECIFICATION

(11) **EP 3 036 884 B1**
(45) Date of publication and mention of the grant of the patent: **19.08.2020**
(21) Application number: 14755079.2
(22) Date of filing: 22.08.2014
(51) Int. Cl.: H04L 29/08, H04L 29/06, H04W 4/16

(54) **SYSTEM AND METHOD FOR SESSION MOBILITY FOR ADAPTIVE BITRATE STREAMING**
SYSTEM UND VERFAHREN FÜR SITZUNGSMOBILITÄT FÜR ADAPTIVES BITRATEN-STREAMING
SYSTÈME ET PROCÉDÉ DE MOBILITÉ DE SESSION POUR STREAMING À DÉBIT ADAPTATIF

(30) Priority: 23.08.2013 US 201361869072 P
(43) Date of publication of application: 29.06.2016
(73) Proprietor: bitmovin GmbH, 9020 Klagenfurt (AT)
(72) Inventor: MÜLLER, Christopher, A-9500 Villach (AT); LEDERER, Stefan, 9020 Klagenfurt (AT); TIMMERER, Christian, A-9020 Klagenfurt (AT)
(74) Representative: Schenk, Markus
(86) International application number: PCT/EP2014/067909
(87) International publication number: WO 2015/025036

(56) References cited:
- WO-A1-2011/091296
- CHRISTOPHER MÜLLER ET AL: "A test-bed for the dynamic adaptive streaming over HTTP featuring session mobility", MMSYS '11 PROCEEDINGS OF THE SECOND ANNUAL ACM CONFERENCE ON MULTIMEDIA SYSTEMS, 23 February 2011 (2011-02-23), pages 271-276, XP055095585, New York, NY, USA DOI: 10.1145/1943552.1943588 ISBN: 978-1-45-030518-1

## Description

The present invention relates to data streaming, and in particular, to a system and method for session mobility for adaptive bitrate streaming.

Video and audio streaming becomes increasingly important.

According to a first approach in the prior art, a user logs on from a remote device, e.g., a remote client, to a server. The user selects a video from a collection of videos that are presented to the user by the server, and after selecting the video, the streaming starts. For this purpose, client software that is compatible with the server is installed at the client side that allows the client to log in at the server and to receive the selected video as a video stream.

At the server side, the server administers all relevant data regarding the video stream.

For example, the server stores, which segment of a plurality of segments was the last segment that was transmitted to the client. Or, the server stores the current replay time of the video. E.g., a replay time of 30:20 may indicate that the last transmitted segment relates to minute 30, second 20 of the video.

Moreover, the server, may, e.g., store, which audio track from a plurality of audio tracks was selected by the user for this video (e.g., the audio track "English" from a group of two available audio tracks "English" and "French"). Furthermore, the server stores, which subtitle of a plurality of subtitles was selected by the user (e.g., the subtitle "German" from a group of five available subtitles "English", "French", "German", "Spanish" and "Italian"). Moreover, the server, may, e.g., store a video data rate that was selected by the user from a plurality of data rates (e.g., a data rate 2 mbps may be selected by the user from the group of available data rates 1 mbps, 2 mbps and 4 mbps; mbps = megabits per second).

In the prior art, when a user stops the replay of the video and logs out, the server may store, where the user interrupted replaying the video (for example, the server stores that the last transmitted segment had the segment number "2319", or, for example, the server stores that the replay of the video was stopped at replay time 37:25). Moreover, according to the prior art, the server may store the selected settings of the user, for example, the selected audio track, the selected subtitle, or the selected quality.

According to the prior art, when the user again logs on to the server from a client to replay the video, the server reads the stored information on the last replay of the video from the server memory and replays the video starting at the replay time at which the video was stopped when the user logged out last time from the server. Moreover, the server uses the settings, e.g., selected by the user when the user was logged in last time, as these settings are stored in the memory of the server and are thus available, when the user again logs in. These settings may, for example, be the selected audio track, the selected subtitle or the selected data rate of the video.

When the user again logs in on the server, the user may use a different client than the client used in the previous log in session. For example, the user may have started to watch the video on his personal computer. He then logged out and again logged in on the server with his tablet computer and continues to watch the video with the same settings automatically starting from the replay time where he interrupted the video. The user may, e.g., again log out and then log in from his smartphone to continue watching the video with the same settings starting from the replay time where the user previously stopped the video when he logged out from his tablet computer.

Similar concepts exist in the prior art for audio streams, e.g., for music streams.

However, the above-described prior art has the disadvantage that the server has to store all information in a server memory that relates to all relevant user streams. For example, consider the example, that an average user, during the months and years of using a (e.g., video and music) streaming service of a content provider, accessed e.g., a total of 10.000 audio and video streams. If storing the settings of one stream requires, e.g., 0.01 MB (0.01 megabyte) of memory, this results in 100 Megabyte of memory needed for every user. Assuming that the content provider has, for example, 10 million users, this results to a memory requirement of 10.000.000 ^{∗} 100 MB = 1.000.000.000 MB = 1000 TB (1000 terabyte) = 1 PB (1 petabyte). Assuming that the content provider should at least have one backup server, this results in a memory requirement of 2 PB petabyte = 2000 TB. Of course, the content provider does not only have to buy the memory, but also has to constantly administer the memory, e.g., check the memory for memory faults, etc, and complex database systems are required to quickly access the information when needed, etc.

Moreover, as all information is stored on the server, the devices, e.g., clients, that want to access the server have to log in at the server with software, which has to be installed on the devices (clients), wherein said software has to be fully compatible with the server. This results, in most cases, to the requirement that proprietary software has to installed on each of the clients which want to access the server streaming services.

In view of the above-described disadvantages of the prior art, it would be highly appreciated if concepts would be provided that allow to smoothly switch between different devices/clients when receiving a media stream from a server, while keeping the requirements with respect to the server low.

WO 2011/091296 A1 discloses methods and apparatuses for bookmarking streaming media sessions. Bookmarks may be used for hypertext transfer protocol (HTTP) streaming media sessions and may support pause and resume functionalities. The bookmarks may be stored at a server or may be stored at a client. The bookmarks may use current HTTP functionalities or may modify existing HTTP functionalities. Methods and apparatus for inter-device session transfer of a streaming media session with bookmarking support are also disclosed. A device currently streaming a media session may initiate the session transfer or a target device may initiate the session transfer. A bookmark may be explicitly requested and stored at the server by a device, may be part of an inter-wireless transmit/receive unit (WTRU) transfer command sent to a server, or may be sent directly from one device to another device.

Christopher Muller et. al.: "A test-bed for the dynamic adaptive streaming over HTTP featuring session mobility", MMSys '11 Proceedings of the second annual ACM conference on Multimedia systems, 23 February 2011, page 271, New York, NY, USA; discloses a multimedia test-bed enabling session mobility in the context of the ISO/IEC MPEG standard, Dynamic Adaptive Streaming over HTTP (DASH), wherein session mobility is defined as the transfer of a running streaming session from one device to another device where it may need to be consumed in an adaptive way. A system is disclosed that takes into account the new context of the device to which the session is transferred and that performs the actual transfer in a seamless and interoperable way.

The object of the present invention is to provide improved concepts for data streaming.

The object of the present invention is solved by a system according to claim 1, by a device according to claim 10, by a method according to claim by a method according to claim 12 and by a computer program according to claim 13.

A system is provided. The system comprises a server, a first device for receiving a first plurality of segments of a media data stream from the server, and a second device for receiving a second plurality of segments of the media data stream from the server. An interface of the first device is configured to receive manifest information indicating, for each property of one or more properties of the media data stream, a group of two or more available versions of said property of the media data stream. A processor of the first device is configured to select, for each of the one or more properties, one of the two or more available versions of said property as a selected version of said property, to determine context information comprising the selected version of each of the one or more properties. The interface of the first device is configured to request said first plurality of segments of the media data stream depending on the context information. The server is configured to transmit said first plurality of segments to the first device. An interface of the second device is configured to receive the context information and information on a replay offset or on the segment being rendered last by the first device or on the segment being received last by the first device, wherein said replay offset depends on a replay of the media data stream at the first device. A processor of the second device is configured to select said second plurality of segments of the media data stream depending on the context information, and depending on the replay offset or on the segment being rendered last by the first device or on the segment being received last by the first device. The interface of the second device is configured to request said second plurality of segments from the server. The server is configured to transmit said second plurality of segments to the second device.

Moreover, a device for receiving a plurality of segments of a media data stream is provided. The device comprises an interface for receiving context information and information on a replay offset or on a segment being rendered last by another device or on a segment being received last by the other device, wherein said replay offset depends on a replay of the media data stream at the other device. Moreover, the device comprises a processor for selecting said plurality of segments of the media data stream depending on the context information, and depending on the replay offset or on the segment being rendered last by the other device or on the segment being received last by the other device. The interface is configured to request said plurality of segments. Moreover, the interface is configured to receive said plurality of segments.

Furthermore, a server is provided. The server comprises an interface for transmitting initial manifest information indicating two or more versions for each of one or more properties of a media data stream and a processor. The interface is configured to receive context information indicating a selected version for each of the one or more properties of the media data stream. The processor is configured to modify the initial manifest information to obtain modified manifest information depending on the context information. The interface is configured to transmit the modified manifest information. Moreover, the interface is configured to receive a request requesting one or more segments of the media data stream, wherein the request depends on the modified manifest information. Furthermore, the interface is configured to transmit said one or more segments of the media data stream.

Furthermore, a method is provided. The method comprises:
- Transmitting manifest information to a first device, wherein the manifest information indicates, for each property of one or more properties of the media data stream, a group of two or more available versions of said property of the media data stream.
- Conducting a selection at the first device such that, for each of the one or more properties, one of the two or more available versions of said property are selected as a selected version of said property, to determine context information comprising the selected version of each of the one or more properties.
- Requesting by the first device a first plurality of segments of the media data stream depending on the context information.
- Transmitting said first plurality of segments from a server to the first device.
- Transmitting from the first device to a second device the context information and information on a replay offset or on the segment being rendered last by the first device or on the segment being received last by the first device, wherein said replay offset depends on a replay of the media data stream at the first device.
- Conducting a selection by the second device, such that a second plurality of segments of the media data stream is selected depending on the context information, and depending on the replay offset or on the segment being rendered last by the first device or on the segment being received last by the first device.
- Transmitting a request for said second plurality of segments from the second device to the server. And:
- Transmitting said second plurality of segments from the server to the second device.

Moreover, a method for receiving a plurality of segments of a media data stream is provided. The method comprises:
- Receiving, at a first device, context information and information on a replay offset or on a segment being rendered last by another device or on a segment being received last by the other device, wherein said replay offset depends on a replay of the media data stream at a second device.
- Selecting at the first device said plurality of segments of the media data stream depending on the context information, and depending on the replay offset or on the segment being rendered last by the other device or on the segment being received last by the other device.
- Requesting said plurality of segments. And:
- Receiving said plurality of segments.

Furthermore, another method is provided. The method comprises:
- Transmitting initial manifest information indicating two or more versions for each of one or more properties of a media data stream.
- Receiving context information indicating a selected version for each of the one or more properties of the media data stream.
- Modifying the initial manifest information to obtain modified manifest information depending on the context information,
- Transmitting the modified manifest information.
- Receiving a request requesting one or more segments of the media data stream, wherein the request depends on the modified manifest information. And:
- Transmitting said one or more segments of the media data stream.

Moreover, a computer program for implementing the above-described method when being executed on a computer or signal processor is provided.

In the following, embodiments of the present invention are described in more detail with reference to the figures, in which:
- Fig. 1: illustrates a system according to an embodiment,
- Fig. 2: illustrates a session mobility architecture according to an embodiment,
- Fig. 3: illustrates a session mobility architecture according to another embodiment with compatible devices,
- Fig. 4: illustrates a session mobility architecture according to a further embodiment with incompatible devices, wherein device A understands the manifest,
- Fig. 5: illustrates a session mobility architecture according to another embodiment with incompatible Devices, wherein a server based modification employs one or more cookies,
- Fig. 6: illustrates a session mobility architecture according to a further embodiment with incompatible devices, wherein a server based modification employs headers,
- Fig. 7: illustrates a device for receiving a plurality of segments of a media data stream according to an embodiment, and
- Fig. 8: illustrates a server according to an embodiment.

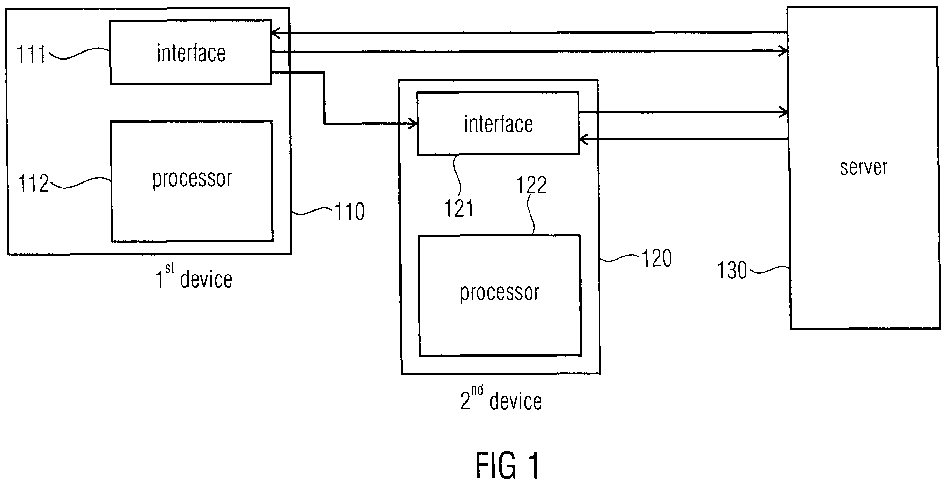

Fig. 1 illustrates a system according to an embodiment.

Embodiments realize session mobility. The transferring of the actual session parameters could take place directly between both devices or through another device, e.g., the HTTP Server. Moreover, the session can be actively transferred by one device or offered by a device in a way that other devices can take over the offered session. In comparison to traditional streaming approaches, in adaptive bitrate streaming systems multiple parameters, e.g., download & playback history, playback state, presentation time, consumed representation (view angle), language, DRM keys, etc. must be handed over to the other device to enable a high quality experience for the user.

The system of Fig. 1 comprises a server 130, a first device 110 for receiving a first plurality of segments of a media data stream from the server 130, and a second device 120 for receiving a second plurality of segments of the media data stream from the server 130.

An interface 111 of the first device 110 is configured to receive manifest information indicating, for each property of one or more properties of the media data stream, a group of two or more available versions of said property of the media data stream.

Such properties of a media data stream, may, for example, be the available data rates, the available audio tracks or the available subtitles. Examples of versions of the properties may, for example, be "1 mbps", "2 mbps" and "5 mbps" for the available data rates of the media data stream; "English", "French" and "German" for the available audio tracks of the media data stream; or "English", "French", "German", "Spanish", "Italian" and "Swedish" for the available subtitles of the media data stream.

A processor 112 of the first device is configured to select, for each of the one or more properties, one of the two or more available versions of said property as a selected version of said property, to determine context information comprising the selected version of each of the one or more properties.

So, one of the available versions for each of the one or more properties is selected as selected version for each property. For example, 2 mbps is selected as the data rate, "English" is selected as the audio track, and "Italian is selected as the subtitle.

The interface 111 of the first device 110 is configured to request said first plurality of segments of the media data stream depending on the context information.

For example, if the context information specifies, that for the property "data rate" the selected version is "2 mbps", then the interface 111 requests those segments of the media data stream that have a data rate of 2 mbps. For example, when, e.g., the three versions of the data rate are available, namely, 1 mbps, 2 mbps, and 5 mbps, three different segment folders may exist at the server 130, the first folder comprising a 1 mbps version of the data stream, wherein the segments of that first version all have a data rate of 1 mbps, the second folder comprising a 2 mbps version of the data stream, wherein the segments of that second version all have a data rate of 2 mbps, and the third folder comprising a 5 mbps version of the data stream, wherein the segments of that third version all have a data rate of 5 mbps. When the first device 110 or the second device 120 wants to request a segment of the data stream with the segment number 1718 having a data rate version of 2 mbps, the first device 110 or the second device 120 may, e.g., specify the parameters "1718" and "2 mbps" in the request. The server 130 may, e.g., then transmit the segment with the segment number 1718 being stored in the second folder (the 2 mbps folder) to the requesting device 110 or 120.

The server 130 is configured to transmit said first plurality of segments to the first device 110.

An interface 121 of the second device 120 is configured to receive the context information and information on a replay offset or on a segment being rendered last by the first device 110 or on a segment being received last by the first device 110, wherein said replay offset depends on a replay of the media data stream at the first device 110.

So, according to embodiments, the interface 121 of the second device 120 receives:
(a) the context information and
(b)
   - information on the replay offset, and/or
   - information on the segment being rendered last by the first device 110, and/or
   - information on the segment being received last by the first device 110.

A processor 122 of the second device 120 is configured to select said second plurality of segments of the media data stream depending on the context information, and depending on the replay offset or on the segment being rendered last by the first device 110 or on the segment being received last by the first device 110.

For example, a user may, for example, have started to watch a video stream on a computer (e.g. the first device 110). The user wants to continue watching the video on his smartphone (e.g., the second device 120).

The information on the selected version of the one or more properties of the media data stream is received by the second device 120 on which streaming of the media data stream is continued.

Moreover, regarding the replay offset, a replay offset, may, for example, identify the time, from which the media data stream shall be replayed. This replay offset may, for example, be represented by a time, for example, identified by an offset. For example, an replay offset of 30:20 may indicate that the video on the second device 120 shall be started at 30 minutes, 20 seconds after the start time 00:00 of the video.

Alternatively or additionally to the replay offset, information on the segment being rendered last by the first device 110 and/or information on the segment being received last by the first device 110 may be transmitted. The segment being received last by the first device 110 indicates the most recently received segment that the first device 110 received before it stopped to receive the segments of the data stream. For example, the segment with segment number 1821 was the last received segment and this information on the segment number 1821 is received by the second device 120.

So, if, for example, the second device 120 receives the information that segment number 1254 was the last segment received by the first device 110, then the second device may request, for example, segment 1255 of the media data stream as its first requested segment, or, for example, may, in other embodiments, request segment 1254 of the media data stream as its first requested segment.

However, in embodiments, the segments may be buffered at the first device 110 before they are replayed. When the first device 110 stops receiving the segments of the media data stream, some of the received segments may still be in the buffer of the first device 110, and in some embodiments, these segments in the buffer may not be rendered / replayed at the first device 110, when the first device 110 stops receiving of the segments of the media data stream.

In such embodiments, it is useful to transmit the information on the segment being (e.g., decoded and) rendered (replayed) last by the first device 110 to the second device. The segment being rendered last by the first device 110 indicates the segment that was most recently rendered at the first device 110. So, for example, the second device 120 may, e.g., receive the information that the segment rendered last by the first device 110 was the segment with segment number 1816. The second device 120 may use this information to, for example, request segments of the media data stream starting with the segment with segment number 1817 (or with segment number 1816, depending on the implementation). If, instead, in such cases the second device 120 would start with replaying the segment last received by the first device (here: the segment with segment number 1821), the segments 1817, 1818, 1819 and 1820 would not have been replayed by any of the two devices 110 and 120. So, informing the second device 120 about the segment being rendered/replayed last by the first device 110 is advantageous for particular embodiments.

The interface 121 of the second device 120 is configured to request said second plurality of segments from the server 130. The server 130 is configured to transmit said second plurality of segments to the second device 120.

In an embodiment, the interface 111 of the first device 110 may, e.g., be configured to request said first plurality of segments of the media data stream depending on the context information, by transmitting a first message comprising the context information and a first indication of a first segment of the first plurality of segments, and by transmitting a second message comprising the context information and a second indication of a second segment of the first plurality of segments. The server 130 may, e.g., be configured to transmit said first plurality of segments to the first device 110, by transmitting the first segment of the first plurality of segments to the first device 110 when the server 130 receives said first message, and by transmitting the second segment of the first plurality of segments to the first device 110 when the server 130 receives said second message. The interface 121 of the second device 120 may, e.g., be configured to request said second plurality of segments of the media data stream depending on the context information, by transmitting a third message comprising the context information and a third indication of a third segment of the second plurality of segments, and by transmitting a fourth message comprising the context information and a fourth indication of a fourth segment of the second plurality of segments. The server 130 may, e.g., be configured to transmit said second plurality of segments to the second device 120, by transmitting the third segment of the second plurality of segments to the second device 120 when the server 130 receives said third message, and by transmitting the fourth segment of the second plurality of segments to the second device 120 when the server 130 receives said fourth message.

In such an embodiment, the context information is transmitted with every request of the first device 110 or the second device 120. This means, the server 130 does not need at all to permanently keep any information about the current streaming session. Instead, all session information is kept at the respective device/client 110, 120 and transmitted to the server 130 with each segment request, e.g., by transmitting the context information.

According to an embodiment, the segments of the data stream are ordered, and wherein the processor 122 of the second device 120 may, e.g., be configured to select said second plurality of segments of the media data stream depending on the replay offset or on the segment being rendered last by the first device 110 or on the segment being received last by the first device 110, so that each of said second plurality of segments being selected by the processor 122 of the second device 120 is the segment being rendered last by the first device 110 or a successor of the segment being rendered last by the first device 110 or is the segment being received last by the first device 110 or a successor of the segment being received last by the first device 110.

In an embodiment, the interface 121 of the second device 120 may, e.g., be configured to receive the context information and the information on the replay offset of the media data stream or on the segment being rendered last by the first device 110 or on the segment being received last by the first device 110, by receiving a context message, wherein the context message may, e.g., comprise a first message portion indicating the selected version of each of the one or more properties of the context information, and wherein the context message comprises a second message portion indicating the segment being rendered last by the first device 110 or indicating the segment being received last by the first device 110.

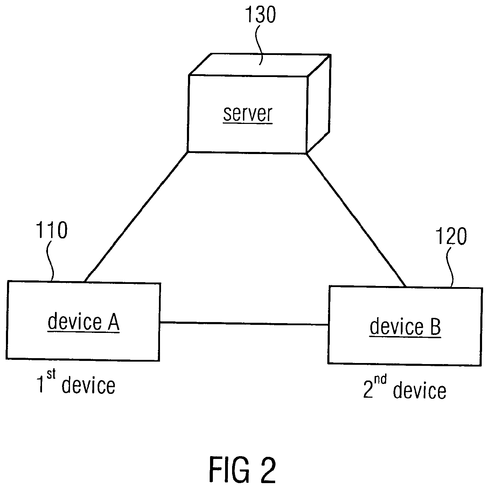

Fig. 2 illustrates a session mobility architecture according to an embodiment. Embodiments provides session mobility, the transferring of an active or inactive streaming session from one device to another.

The transferring of the actual session parameters could take place directly between both devices or through another device, e.g., the HTTP Server. For transmission, e.g. via NFC, Bluetooth, Wifi, 3G or Email, may be employed. Moreover, the session can be actively transferred by one device or offered by a device in a way that other devices can take over the offered session. In comparison to traditional streaming approaches, in adaptive bitrate streaming systems multiple parameters, e.g., download & playback history, playback state, presentation time, consumed representation (view angle), language, DRM keys, etc. must be handed over to the other device to enable a high quality experience for the user.

Embodiments provide handover concepts of such information for devices. Concepts are provided for devices which are compatible. Further concepts are provided for devices which are incompatible.

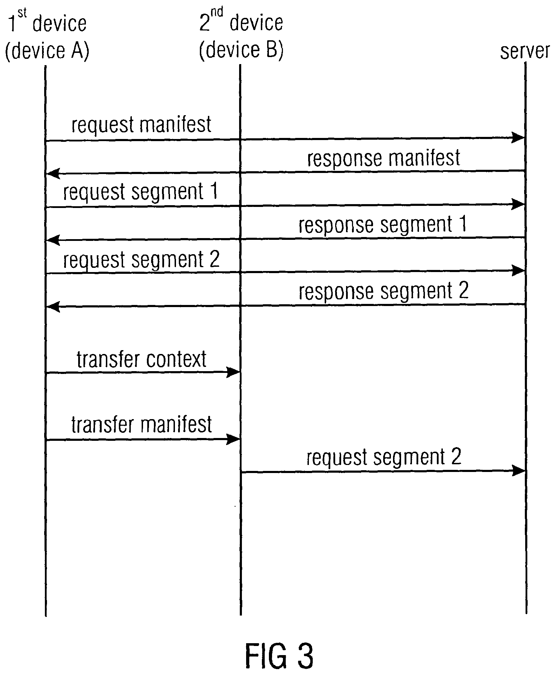

Fig. 3 illustrates a session mobility architecture according to another embodiment with compatible devices. Compatible devices that are using the same or interoperable software/hardware can act as shown in Fig. 3.

For example Device A starts a media streaming session where it initially requests a Manifest that describes the content and the inter-temporal relationships between the individual representations of the content and the segments. Afterwards, Device A can decide to handover the streaming session to Device B, which means that Device B has been located through the Network, Bluetooth, NFC, etc. Alternatively, Device A can also offer the streaming session for other devices through the Network, Bluetooth, NFC, etc., and Device B can connect to Device A. In both cases Device A will transfer the current context of the session that includes, information about already downloaded and played segments, the playback state, DRM keys, language, used representation, etc. to Device B. After that it can handover the Manifest file that has been downloaded from the content server or the URL of the Manifest to Device B, which can immediately start the streaming session with the modified parameters that it has received from Device A. Therefore, Device B needs to understand the information that has been handed over by Device A, which means that both devices must have software or hardware installed that provides interoperability for the exchange, the interpretation and the combination of the data.

So, according to an embodiment, the interface 111 of the first device 110 may, e.g., be configured to transmit the manifest information indicating, for each property of one or more properties of said data stream, the group of the two or more available versions of said property of the data stream, to the second device 120. The interface 111 of the first device 110 may, e.g., be configured to transmit the context information comprising, for each of the one or more properties, the selected property of the two or more available versions of said property, to the second device 120. The interface 121 of the second device 120 may, e.g., be configured to receive the manifest information and the context information from the first device 110.

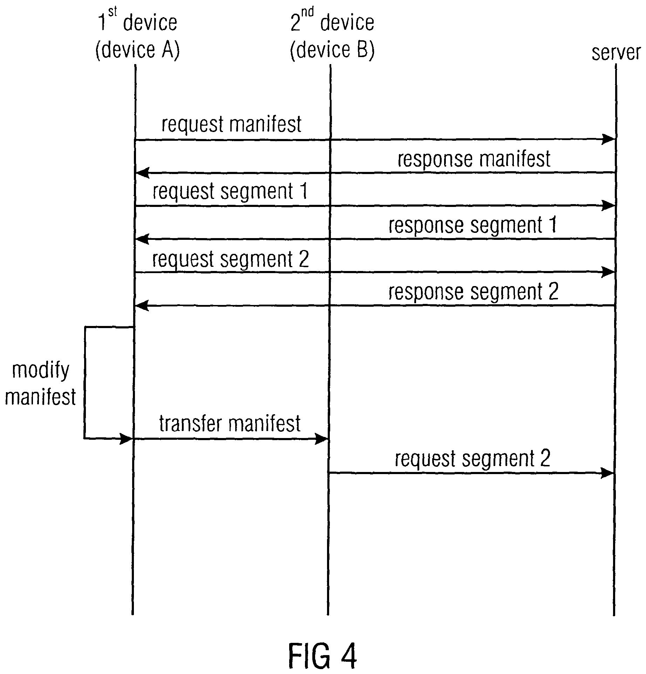

Fig. 4 illustrates a session mobility architecture according to a further embodiment with incompatible devices, wherein device A understands the manifest. In Fig. 4, where Device A and B are incompatible but both are able to consume adaptive bitrate media. Therefore, Device A modifies the Manifest in such a way that Device B will start the streaming session with an offset. This can be achieved with various methods such as in case of Dynamic Adaptive Streaming over HTTP (DASH) one can modify the Manifest into a "dynamic" and through the "availability start time" attribute the presentation offset can be set. Alternatively in other streaming systems similar techniques are available to modify the Manifest in such a way that it is compliant to the given standard and interpretable by Device B. Using this technique for the transfer has the advantage that Device B does not have to interpret or combine the information from Device A. Device B only has to know the given adaptive media streaming standard, such as Microsoft® Smooth Streaming, Apple® HTTP Live Streaming, Adobe® Dynamic HTTP Streaming or MPEG Dynamic Adaptive Streaming over HTTP. Anyway, Device A needs to understand the used media streaming standard mechanisms that can be used to modify the Manifest correctly.

So according to an embodiment, the interface 111 of the first device 110 of Fig. 1 may, e.g., be configured to receive the manifest information as received manifest information, said received manifest information indicating, for each property of the one or more properties of said data stream, the group of two or more available versions of said property of the data stream. Moreover, the interface 111 of the first device 110 may, e.g., be configured to modify the received manifest information to obtain modified manifest information, such that said modified manifest information indicates at least one of the context information and the information on a replay offset and the information on the segment being rendered last by the first device 110 and the information on the segment being received last by the first device 110, by receiving the modified manifest information. The interface 121 of the second device 120 may, e.g., be configured to receive at least one of the context information and the information on a replay offset and the information on the segment being rendered last by the first device 110 and the information on the segment being received last by the first device 110, by receiving the modified manifest information.

According to an embodiment, the processor 112 of the first device 110 may, e.g., be configured to modify the received manifest information to obtain modified manifest information, such that said modified manifest information indicates the replay offset or the segment being rendered last by the first device 110 or the segment being received last by the first device 110. Moreover, the interface 111 of the first device 110 may, e.g., be configured to transmit the modified manifest information to the second device 120. The interface 121 of the second device 120 may, e.g., be configured to receive the context information and to receive the information on the replay offset or on the segment being rendered last by the first device 110 or on the segment being received last by the first device 110 by receiving the modified manifest information from the first device 110.

For example, the available versions of the property "audio track" of a media data stream may be "English", "French" and "German". The user at the first device/client 110 may have selected "German". When the first device 110 stops receiving segments, the first device modifies the manifest and deletes "English" and "French" from the modified manifest, so that only the version "German" is indicated as being available. The modified manifest is then transmitted to the second device/client 120 and when the second device 120 reads the modified manifest, it concludes that "German" has to be chosen as "audio track". An advantage is, that a second device 120 only has to understand (the syntax of) the manifest, by does not need to understand, the (possibly, device-specific) context information. Instead, the first client prepares the manifest accordingly.

In some embodiments, only some properties are restricted to the selected version in the modified manifest information while the available version of other properties may not be restricted in the modified manifest information, e.g., the modified manifest file. For example, in the above example, the modified manifest information may only indicate "German" as available "audio track", while all available subtitle versions, e.g., "English", "French"; "German"; "Italian", "Spanish" and "Swedish" as still indicated as being available in, e.g., a modified manifest file.

In further embodiment, some of the available versions of a property of the media data stream may be restricted to a preselection. For example, if in an initial manifest information, "English", "French" and "German" are available as audio tracks, the first device 110 may preselect "English" and "German". When ending receiving the segments of the media data stream, the first device 110 may remove only "French" from the modified manifest information, and may transmit this modified manifest to the second device. The modified manifest information then indicates only "German" and "English" as available audio tracks.

Regarding the information replay offset or the information on the segment being rendered last by the first device 110 or the information on the segment being received last by the first device 110, such information may be transmitted within the manifest information. For example, the first device 110 may modify the manifest information, such that the modified manifest information comprises the information on the replay offset or on the segment being rendered last by the first device 110 or on the segment being received last by the first device 110.

In an embodiment, the processor 112 of the first device 110 may, e.g., be configured to modify the received manifest information to obtain modified manifest information, such that said modified manifest information indicates for each property of said one or more properties of said data stream, one or more available versions of said group of two or more available versions of said property of the data stream, such that the selected version of said property is among the one or more available versions indicated by the modified manifest information for said property, and such that said modified manifest information indicates for a property of the one or more properties of said data stream, exactly one available version of the group of two or more available versions of said property of the data stream, said exactly one available version of said property being the selected version of said property of the context information. Moreover, the interface 111 of the first device 110 may, e.g., be configured to transmit the modified manifest information to the second device 120. Furthermore, the interface 121 of the second device 120 may, e.g., be configured to receive the context information by receiving the modified manifest information from the first device 110.

In such an embodiment, for a property (this means for at least one property) of two or more properties of the data stream, exactly one available version of said property of the data stream is indicated in the modified manifest information.

According to an embodiment, the processor 112 of the first device 110 may, e.g., be configured to modify the received manifest information to obtain modified manifest information, such that said modified manifest information indicates for each property of the one or more properties of said data stream, exactly one available version of the group of two or more available versions of said property of the data stream, said exactly one available version of said property being the selected version of said property of the context information.

In such an embodiment, for each property of the properties of the data stream, exactly one available version of said property of the data stream is indicated in the modified manifest information.

In an embodiment, the interface 121 of the second device 120 may, e.g., be configured to receive at least one of the context information and the information on a replay offset and the information on the segment being rendered last by the first device 110 and the information on the segment being received last by the first device 110, by receiving the modified manifest information. The modified manifest information may, e.g., comprise a plurality of tagged information elements, wherein a property of each of the plurality of tagged information elements is characterized by a start tag and by an end tag being assigned to said start tag. The processor 122 of the second device 120 may, e.g., be configured to analyse the at least one of the start tag and the end tag of at least one of the tagged information elements of the modified manifest information to determine, whether the processor 122 of the second device 120 is adapted to interpret the said tagged information element. The processor 122 of the second device 120 may, e.g., be configured to select at least one of said second plurality of segments of the media data stream depending on said tagged information element, if the processor 122 of the second device 120 is adapted to interpret the said tagged information element. The processor 122 of the second device 120 may, e.g., be configured to not select any of said second plurality of segments of the media data stream depending on said tagged information element, if the processor 122 of the second device 120 is not adapted to interpret said tagged information element.

These embodiments relate, for example, to markup language representations of the modified manifest file. For example, XML is a markup language. An information element starts with a start tag, for example, the start tag "<audio track>" and ends with an end tag, being assigned to the start tag, for example, the end tag "</audio track>. The (combined) information element
<audio track><version>English</version><version>French</version> <version>German </version></audio track>
may, for example, indicate that the available versions of the property "audio track" of the media data stream are English, French and German.

Employing a representation using tagged information elements for the (initial or modified) manifest file has an advantage, as, the devices 110, 120, for example, the second device, can immediately judge from analysing the start tag, whether it can interpret the information contained in the information element. Information, encoded by the first device 110, that cannot be interpreted by the second device 120, can be immediately ignored by the second device 120 when analysing the start tag. This supports interoperability and accelerates processing.

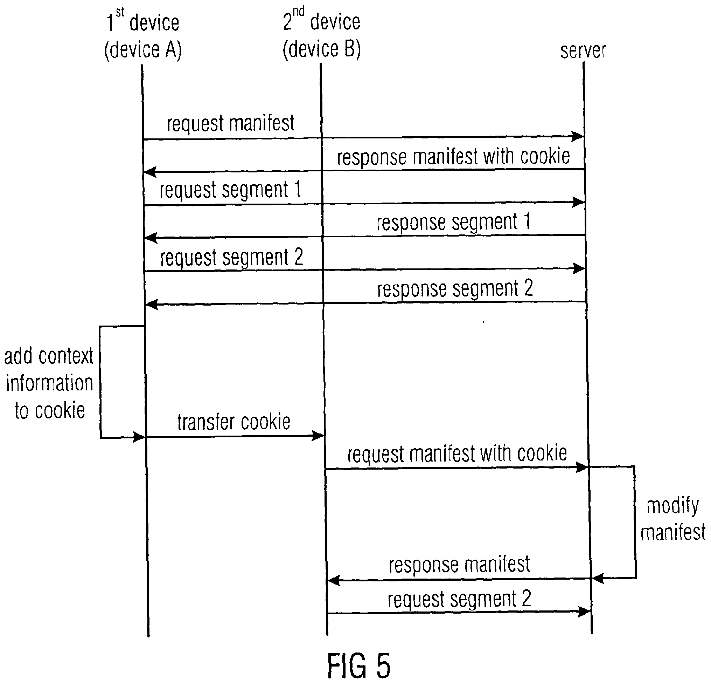

Fig. 5 illustrates a session mobility architecture according to another embodiment with incompatible Devices, wherein a server based modification employs one or more cookies. In particular, Fig. 5 illustrates an approach where Device A does not know how to modify the Manifest correctly so that Device B will start the presentation with the offset as needed. In this scenario the Server keeps track of the session through additional information which will be send to the client in the corresponding response to the Manifest request. In case of the HTTP protocol this could be achieved through cookies that will be send with the Manifest from the Server. Additionally, Device A requests the individual segments with that information or the cookie so that the Server can keep track of the session. When Device A transfers the streaming session to Device B it will also transfer its cookie or other information that has been received from the Server to Device B. Additionally, Device A can also add information to the cookie such as, playback state, presentation time etc. Device B will request the Manifest with the cookie from the Server and the Server will respond with an modified Manifest that starts at the time when Device A has transferred the session to Device B.

According to such an embodiment, processor 112 of the first device 110 may, e.g., be configured to generate a HTTP cookie comprising the context information and information on a replay offset or on the segment being rendered last by the first device 110 or on the segment being received last by the first device 110, wherein said replay offset depends on a replay of the media data stream at the first device 110. The interface 111 of the first device 110 may, e.g., be configured to transmit the HTTP cookie to the second device 120 or to the server 130. The server 130 may, e.g., be configured to receive the HTTP cookie. The manifest information may, e.g., be an initial manifest information, and wherein the server 130 is configured to modify the initial manifest information to obtain modified manifest information depending on the HTTP cookie, such that said modified manifest information indicates at least one of the context information and the information on a replay offset and the information on the segment being rendered last by the first device 110 and the information on the segment being received last by the first device 110, by receiving the modified manifest information. The interface 121 of the second device 120 may, e.g., be configured to receive at least one of the context information and the information on a replay offset and the information on the segment being rendered last by the first device 110 and the information on the segment being received last by the first device 110, by receiving the modified manifest information from the server 130.

Employing HTTP cookies for transmitting the information is advantageous because of the interoperability.

For example, according to an embodiment, a digital item (e.g., an MPEG-21 digital item) may, e.g., be employed, e.g., to transmit the context information.

Or, in another embodiment, an XML-Patch may be employed, e.g., to transmit the context information. An XML-Patch may, for example, comprise information, how an XML file shall be modified. For example, initial manifest information may be an XML-file, and the XML-patch may comprise information, how the XML-file comprising the initial manifest information shall be modified to obtain the modified manifest information. The XML-patch may itself be a file, for example, may itself be an XML-file.

In another embodiment, the whole modified MPD may be transmitted to the server.

In such embodiments, devices/clients only need to understand the manifest information, e.g. the media presentation description (MPD), and the conducted modification. In an embodiment, the manifest information may be represented according to a representation that satisfies RFC 5261 (see: http://tools.ietf.org/html/rfc5261).

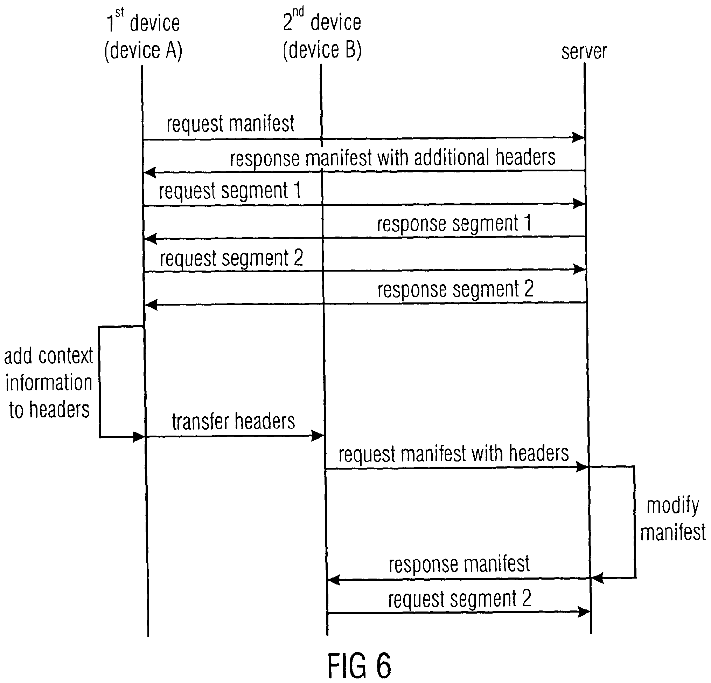

Fig. 6 illustrates a session mobility architecture according to a further embodiment with incompatible devices, wherein a server based modification employs headers.

So according to such an embodiment, the processor 112 of the first device 110 may, e.g., be configured to generate one or more headers of a message, said one or more headers comprising the context information and information on a replay offset or on the segment being rendered last by the first device 110 or on the segment being received last by the first device 110, wherein said replay offset depends on a replay of the media data stream at the first device 110. The interface 111 of the first device 110 may, e.g., be configured to transmit the one or more headers to the second device 120 or to the server 130. The server 130 may, e.g., be configured to receive the one or more headers. The manifest information may, e.g., be an initial manifest information, and wherein the server 130 is configured to modify the initial manifest information to obtain modified manifest information depending on the one or more headers, such that said modified manifest information indicates at least one of the context information and the information on a replay offset and the information on the segment being rendered last by the first device 110 and the information on the segment being received last by the first device 110, by receiving the modified manifest information. The interface 121 of the second device 120 may e.g., be configured to receive at least one of the context information and the information on a replay offset and the information on the segment being rendered last by the first device 110 and the information on the segment being received last by the first device 110, by receiving the modified manifest information from the server 130.

In the scenario of Fig. 5 and 6, the server, for example, receives the context information, e.g., by receiving a cookie or header information, and modifies initial manifest information, for example, as described above. For example, available versions of one or more of the properties of the data stream may be deleted from the manifest information.

For example, the available versions of the property "subtitle" of a media data stream may be "English", "French", "German", "Italian", "Spanish" and "Swedish". The user at a first device may have selected "Italian". When the first device stops receiving segments, this (portion of) the context information is transmitted to the server, e.g., via the second device, which continues receiving the segment. The server then modifies the manifest and deletes "English", "French", "German", "Spanish" and "Swedish" from the modified manifest, so that only the version "Italian" is still available. The modified manifest is then transmitted to the second device and when the second device reads the modified manifest, it concludes that "Italian" has to be chosen as "subtitle". An advantage is, that a second device only has to understand (the syntax of) the manifest, by does not need to understand, the possibly, device-specific, context information. Instead, it is sufficient, if only the server is capable of understanding the, possibly device-specific context information of the devices. Moreover, it is particularly advantageous to transmit the context information to the server, if the first device 110 of Fig. 1 does not know how to modify the manifest, so that the second device 120 can understand the modified manifest. In such a case, the server 130 modifies the manifest information as described with reference to Figs. 5 and 6.

For example, regarding some kind of videos, two or more media data streams may be employed to transmit the video. For example, a first one of the media data streams may, e.g., transmit the image information, and a second one of the media data streams may, e.g., transmit the sound information. For example, a third media data stream may, e.g., transmit the subtitles. In such cases where two or more media data streams are transmitted, the manifest information may, e.g., comprise information on the available versions of the properties of each of the data streams, and the context information may, e.g., specify the selected version of each of the properties of each of the two or more media data streams.

According to such embodiments, the media data stream may, e.g., be a first media data stream. The first device 110 may, e.g., be configured to receive a third plurality of segments of the second media data stream from the server 130. The second device 120 may, e.g., be configured to receive a fourth plurality of segments of the second media data stream from the server 130. The interface 111 of the first device 110 may, e.g., be configured to receive manifest information indicating, for each property of one or more properties of the second media data stream, a group of two or more available versions of said property of the second media data stream. The processor 112 of the first device 110 may, e.g., be configured to select, for each of the one or more properties of the second media data stream, one of the two or more available versions of said property as a selected version of said property of the second media data stream, to determine the context information, wherein the context information further comprises the selected version of each of the one or more properties of the second media data stream. The interface 111 of the first device 110 may, e.g., be configured to request said third plurality of segments of the second media data stream depending on the context information. The server 130 may, e.g., be configured to transmit said third plurality of segments to the first device 110. The interface 121 of the second device 120 may, e.g., be configured to further receive information on a further replay offset or on the segment of the second media data stream being rendered last by the first device 110 or on the segment of the second media data stream being received last by the first device 110, wherein said further replay offset depends on a replay of the second media data stream at the first device 110. The processor 122 of the second device 120 may, e.g., be configured to select said fourth plurality of segments of the second media data stream depending on the context information, and depending on the further replay offset or on the segment of the second media data stream being rendered last by the first device 110 or on the segment of the second media data stream being received last by the first device 110. The interface 121 of the second device 120 may, e.g., be configured to request said fourth plurality of segments from the server 130. The server 130 may, e.g., be configured to transmit said fourth plurality of segments to the second device 120.

In an embodiment, the first media data stream may, e.g., be a video data stream, and/or the second media data stream may, e.g., be an audio data stream.

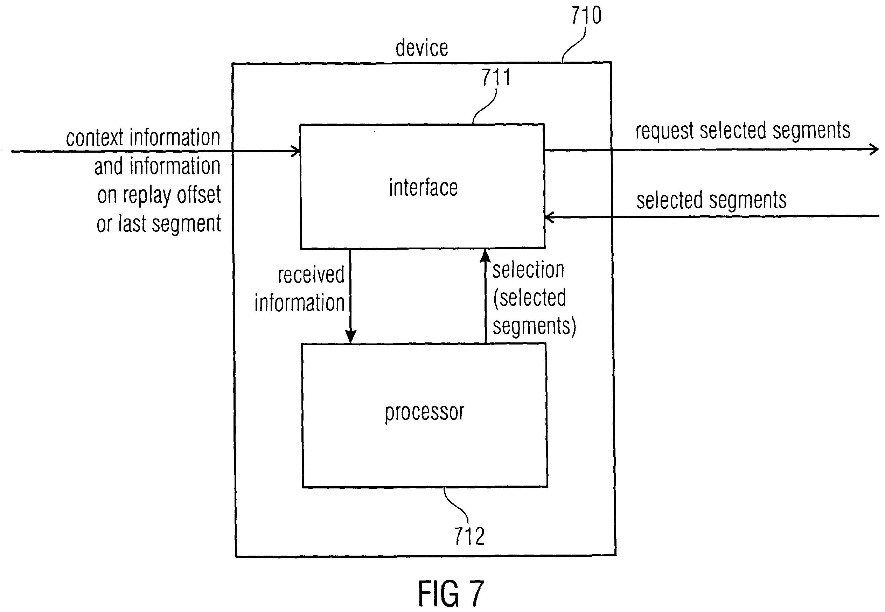

Fig. 7 illustrates a device 710 for receiving a plurality of segments of a media data stream according to an embodiment. In embodiments, the first device 110 and/or the second device 120 of one of Figs. 1 to 6 may, for example, be configured as described with reference to Fig. 7 in the following. Likewise, in embodiments, the device 710 of Fig. 7 may be configured as described for the first device 110 and/or the second device 120 in the description above that made reference to Figs. 1 to 6.

The device 710 of Fig. 7 comprises an interface 711 for receiving context information and information on a replay offset or on a segment being rendered last by another device or on a segment being received last by the other device, wherein said replay offset depends on a replay of the media data stream at said other device.

Moreover, the device 710 comprises a processor 712 for selecting said plurality of segments of the media data stream depending on the context information, and depending on the replay offset or on the segment being rendered last by said other device or on the segment being received last by said other device.

The interface 711 is configured to request said plurality of segments. Moreover, the interface 711 is configured to receive said plurality of segments.

In an embodiment, the device is capable of receiving context information from a second device which previously received segments of the media data stream, but, moreover, the device is also capable of transmitting its own context information, when the device stops receiving the portions of the media data stream. Thus, in such a preferred embodiment, the device has the capability of receiving and processing ("foreign") context information, as well as the capability of generating and transmitting (its own) context information.

So to also generate "own" context information that shall be transmitted to a "third device", in such an embodiment, the interface 711 of the device 710 may, e.g., moreover be configured to receive manifest information indicating, for each property of one or more properties of the media data stream, a group of two or more available versions of said property of the media data stream.

The processor 712 of the device 710 may, e.g., be configured to select, for each of the one or more properties, one of the two or more available versions of said property as a selected version of said property, to determine further context information (its own) comprising the selected version of each of the one or more properties.

The interface 711 of the device 710 may, e.g., be configured to request said another plurality of segments of the media data stream depending on the further context information. Moreover, the interface 711 of the device 710 may, e.g., be configured to transmit information on the further context information and information on a further replay offset or on the segment being rendered last by the device 710 or on the segment being received last by the device 710, wherein said further replay offset depends on a replay of the media data stream at the device 710.

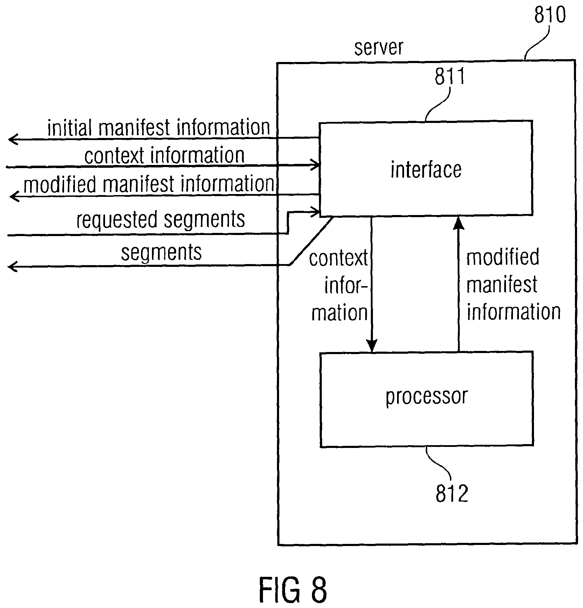

Fig. 8 illustrates a server according to an embodiment. In embodiments, the server of one of Figs. 1 to 6 may, for example, be configured as described with reference to Fig. 8 in the following. Likewise, in embodiments, the server 810 of Fig. 8 may be configured as described for the server 130 in the description above that made reference to Figs. 1 to 6.

The server 810 of Fig. 8 comprises an interface 811 for transmitting initial manifest information indicating two or more versions for each of one or more properties of a media data stream and a processor 812.

The interface 811 is configured to receive context information indicating a selected version for each of the one or more properties of the media data stream.

The processor 812 is configured to modify the initial manifest information to obtain modified manifest information depending on the context information

The interface 811 is configured to transmit the modified manifest information. Moreover, the interface 811 is configured to receive a request requesting one or more segments of the media data stream, wherein the request depends on the modified manifest information. Furthermore, the interface 811 is configured to transmit said one or more segments of the media data stream.

Such a server 810 acts, for example, as described for the server in Figs. 5 and 6. The interface of the server 810, for example, receives the context information, e.g., by receiving a cookie or header information, and modifies the initial manifest information, for example, as described above. For example, available versions of one or more of the properties of the data stream may be deleted from the manifest information.

For example, the available versions of the property "audio track" of a media data stream may be "English", "French" and "German". The user at a first device may have selected "German". When the first device stops receiving segments, this (portion of) the context information is transmitted to the server 810, e.g., via the second device, which continues receiving the segment. The server 810 then modifies the manifest and deletes "English" and "French" from the modified manifest, so that only the version "German" is available. The modified manifest is then transmitted to the second device and when the second device reads the modified manifest, it concludes that "German" has to be chosen as "audio track". An advantage is, that a second device only has to understand (the syntax of) the manifest, by does not need to understand, the possibly, device-specific, context information. Instead, it is sufficient, if only the server 810 understands the, possibly device-specific context information of the devices. Moreover, it is particularly advantageous to transmit the context information to the server, if the first device, which ends receiving the segments of the media data stream does not know how to modify the manifest, so that a second device, which wants to continue the receiving of the segments of the data stream, can understand the modified manifest. In such a case, the server 810 modifies the manifest information as described with reference to Figs. 5 and 6. In such embodiments, only the server 810 has to be capable to modify the manifest information, but not the device which stops receiving the segments of the data stream.

### References

[1] C. Mueller, C. Timmerer, "A Test-Bed for the Dynamic Adaptive Streaming over HTTP featuring Session Mobility", ACM Multimedia Systems, San Jose, California, USA, Feb. 2011, pp. 271-276.
[2] DE KEUKELAERE, Frederik; DE SUTTER, Robbie; VAN DE WALLE, Rik. MPEG- 21 Session Mobility on Mobile Devices. In: International Conference on Internet Computing. 2005. S. 287-293.
[3] SONG, Yu, et al. Browser session mobility system for multi-platform applications. U.S. Patent Application 10/404,849, 2003.
[4] RFC 5261: Network Working Group; Request for Comments: 5261; September 2008 (http://tools.ietf.org/html/rfc5261).

## Claims

1. A system, comprising:
a server (130; 810),
a first device (110; 710) for receiving a first plurality of segments of a media data stream from the server (130; 810), and
a second device (120; 710) for receiving a second plurality of segments of the media data stream from the server (130; 810),
wherein an interface (111; 711) of the first device (110; 710) is configured to receive manifest information indicating, for each property of one or more properties of the media data stream, a group of two or more available versions of said property of the media data stream,
wherein a processor (112; 712) of the first device (110; 710) is configured to select, for each of the one or more properties, one of the two or more available versions of said property as a selected version of said property, to determine context information comprising the selected version of each of the one or more properties,
wherein the interface (111; 711) of the first device (110; 710) is configured to request said first plurality of segments of the media data stream depending on the context information,
wherein the server (130; 810) is configured to transmit said first plurality of segments to the first device (110; 710),
wherein an interface (121; 711) of the second device (120; 710) is configured to receive the context information and information on a replay offset or on a segment being rendered last by the first device (110; 710) or on a segment being received last by the first device (110; 710), wherein the replay offset depends on a replay of the media data stream at the first device (110; 710),
wherein a processor (122; 712) of the second device (120; 710) is configured to select said second plurality of segments of the media data stream depending on the context information, and depending on the replay offset or on the segment being rendered last by the first device (110; 710) or on the segment being received last by the first device (110; 710),
wherein the interface (121; 711) of the second device (120; 710) is configured to request said second plurality of segments from the server (130; 810), and
wherein the server (130; 810) is configured to transmit said second plurality of segments to the second device (120; 710).

2. A system according to claim 1,
wherein the interface (111; 711) of the first device (110; 710) is configured to request said first plurality of segments of the media data stream depending on the context information, by transmitting a first message comprising the context information and a first indication of a first segment of the first plurality of segments, and by transmitting a second message comprising the context information and a second indication of a second segment of the first plurality of segments,
wherein the server (130; 810) is configured to transmit said first plurality of segments to the first device (110; 710), by transmitting the first segment of the first plurality of segments to the first device (110; 710) when the server (130; 810) receives said first message, and by transmitting the second segment of the first plurality of segments to the first device (110; 710) when the server (130; 810) receives said second message,
wherein the interface (121; 711) of the second device (120; 710) is configured to request said second plurality of segments of the media data stream depending on the context information, by transmitting a third message comprising the context information and a third indication of a third segment of the second plurality of segments, and by transmitting a fourth message comprising the context information and a fourth indication of a fourth segment of the second plurality of segments, and
wherein the server (130; 810) is configured to transmit said second plurality of segments to the second device (120; 710), by transmitting the third segment of the second plurality of segments to the second device (120; 710) when the server (130; 810) receives said third message, and by transmitting the fourth segment of the second plurality of segments to the second device (120; 710) when the server (130; 810) receives said fourth message.

3. A system according to claim 1 or 2, wherein the segments of the data stream are ordered, and wherein the processor (122; 712) of the second device (120; 710) is configured to select said second plurality of segments of the media data stream depending on the replay offset or on the segment being rendered last by the first device (110; 710) or on the segment being received last by the first device (110; 710), so that each of said second plurality of segments being selected by the processor (122; 712) of the second device (120; 710) is the segment being rendered last by the first device (110; 710) or a successor of the segment being rendered last by the first device (110; 710) or the segment being received last by the first device (110; 710) or a successor of the segment being received last by the first device (110; 710).

4. A system according to one of the preceding claims,
wherein the interface (111; 711) of the first device (110; 710) is configured to receive the manifest information as received manifest information, said received manifest information indicating, for each property of the one or more properties of said data stream, the group of two or more available versions of said property of the data stream,
wherein the interface (111; 711) of the first device (110; 710) is configured to modify the received manifest information to obtain modified manifest information, such that said modified manifest information indicates at least one of the context information and the information on the replay offset and the information on the segment being rendered last by the first device (110; 710) and the information on the segment being received last by the first device (110; 710), by receiving the modified manifest information,
wherein the interface (121; 711) of the second device (120; 710) is configured to receive at least one of the context information and the information on the replay offset and the information on the segment being rendered last by the first device (110; 710) and the information on the segment being received last by the first device (110; 710), by receiving the modified manifest information.

5. A system according to claim 4,
wherein the processor (112; 712) of the first device (110; 710) is configured to modify the received manifest information to obtain modified manifest information, such that said modified manifest information indicates for each property of said one or more properties of said data stream, one or more available versions of said group of two or more available versions of said property of the data stream, such that the selected version of said property is among the one or more available versions indicated by the modified manifest information for said property, and such that said modified manifest information indicates for a property of the one or more properties of said data stream, exactly one available version of the group of two or more available versions of said property of the data stream, said exactly one available version of said property being the selected version of said property of the context information,
wherein the interface (111; 711) of the first device (110; 710) is configured to transmit the modified manifest information to the second device (120; 710), and
wherein the interface (121; 711) of the second device (120; 710) is configured to receive the context information by receiving the modified manifest information from the first device (110; 710).

6. A system according to claim 4 or 5,
wherein the interface (121; 711) of the second device (120; 710) is configured to receive at least one of the context information and the information on the replay offset and the information on the segment being rendered last by the first device (110; 710) and the information on the segment being received last by the first device (110; 710), by receiving the modified manifest information,
wherein the modified manifest information comprises a plurality of tagged information elements, wherein a property of each of the plurality of tagged information elements is **characterized by** a start tag and by an end tag being assigned to said start tag,
wherein the processor (122; 712) of the second device (120; 710) is configured to analyse the at least one of the start tag and the end tag of at least one of the tagged information elements of the modified manifest information to determine, whether the processor (122; 712) of the second device (120; 710) is adapted to interpret the said tagged information element,
wherein the processor (122; 712) of the second device (120; 710) is configured to select at least one of said second plurality of segments of the media data stream depending on said tagged information element, if the processor (122; 712) of the second device (120; 710) is adapted to interpret the said tagged information element, and
wherein the processor (122; 712) of the second device (120; 710) is configured to not select any of said second plurality of segments of the media data stream depending on said tagged information element, if the processor (122; 712) of the second device (120; 710) is not adapted to interpret said tagged information element.

7. A system according to one of claims 1 to 3,
wherein the processor (112; 712) of the first device (110; 710) is configured to generate a HTTP cookie comprising the context information and the information on the replay offset or on the segment being rendered last by the first device (110; 710) or on the segment being received last by the first device (110; 710),
wherein the interface (111; 711) of the first device (110; 710) is configured to transmit the HTTP cookie to the second device (120; 710) or to the server (130; 810),
wherein the server (130; 810) is configured to receive the HTTP cookie,
wherein the manifest information is an initial manifest information, and wherein the server (130; 810) is configured to modify the initial manifest information to obtain modified manifest information depending on the HTTP cookie, such that said modified manifest information indicates at least one of the context information and the information on the replay offset and the information on the segment being rendered last by the first device (110; 710) and the information on the segment being received last by the first device (110; 710), by receiving the modified manifest information, and
wherein the interface (121; 711) of the second device (120; 710) is configured to receive at least one of the context information and the information on the replay offset and the information on the segment being rendered last by the first device (110; 710) and the information on the segment being received last by the first device (110; 710), by receiving the modified manifest information from the server (130; 810).

8. A system according to one of claims 1 to 3,
wherein the processor (112; 712) of the first device (110; 710) is configured to generate one or more headers of a message, said one or more headers comprising the context information and the information on the replay offset or on the segment being rendered last by the first device (110; 710) or on the segment being received last by the first device (110; 710),
wherein the interface (111; 711) of the first device (110; 710) is configured to transmit the one or more headers to the second device (120; 710) or to the server (130; 810),
wherein the server (130; 810) is configured to receive the one or more headers,
wherein the manifest information is an initial manifest information, and wherein the server (130; 810) is configured to modify the initial manifest information to obtain modified manifest information depending on the one or more headers, such that said modified manifest information indicates at least one of the context information and the information on the replay offset and the information on the segment being rendered last by the first device (110; 710) and the information on the segment being received last by the first device (110; 710), by receiving the modified manifest information, and
wherein the interface (121; 711) of the second device (120; 710) is configured to receive at least one of the context information and the information on the replay offset and the information on the segment being rendered last by the first device (110; 710) and the information on the segment being received last by the first device (110; 710), by receiving the modified manifest information from the server (130; 810).

9. A system according to one of the preceding claims,
wherein the media data stream is a first media data stream,
wherein the first device (110; 710) is configured to receive a third plurality of segments of the second media data stream from the server (130; 810),
wherein the second device (120; 710) is configured to receive a fourth plurality of segments of the second media data stream from the server (130; 810),
wherein the interface (111; 711) of the first device (110; 710) is configured to receive manifest information indicating, for each property of one or more properties of the second media data stream, a group of two or more available versions of said property of the second media data stream,
wherein the processor (112; 712) of the first device (110; 710) is configured to select, for each of the one or more properties of the second media data stream, one of the two or more available versions of said property as a selected version of said property of the second media data stream, to determine the context information, wherein the context information further comprises the selected version of each of the one or more properties of the second media data stream,
wherein the interface (111; 711) of the first device (110; 710) is configured to request said third plurality of segments of the second media data stream depending on the context information,
wherein the server (130; 810) is configured to transmit said third plurality of segments to the first device (110; 710),
wherein the interface (121; 711) of the second device (120; 710) is configured to further receive information on a further replay offset or on the segment of the second media data stream being rendered last by the first device (110; 710) or on the segment of the second media data stream being received last by the first device (110; 710), wherein the further replay offset depends on a replay of the second media data stream at the first device (110; 710),
wherein the processor (122; 712) of the second device (120; 710) is configured to select said fourth plurality of segments of the second media data stream depending on the context information, and depending on the further replay offset or on the segment of the second media data stream being rendered last by the first device (110; 710) or on the segment of the second media data stream being received last by the first device (110; 710),
wherein the interface (121; 711) of the second device (120; 710) is configured to request said fourth plurality of segments from the server (130; 810), and
wherein the server (130; 810) is configured to transmit said fourth plurality of segments to the second device (120; 710).

10. A device (110, 120; 710) for receiving a plurality of segments of a media data stream, comprising:
an interface (111, 121; 711) for receiving context information comprising the version of each of one or more properties of the media data stream selected by another device and information on a replay offset or on a segment being rendered last by said another device or on a segment being received last by the other device, wherein the replay offset depends on a replay of the media data stream at the other device, and
a processor (112, 122; 712) for selecting said plurality of segments of the media data stream depending on the context information, and depending on the replay offset or on the segment being rendered last by the other device or on the segment being received last by the other device,
wherein the interface (111, 121; 711) is configured to request said plurality of segments, and
wherein the interface (111, 121; 711) is configured to receive said plurality of segments,
wherein the interface (111, 121; 711) of the device (110, 120; 710) is configured to receive manifest information indicating, for each property of one or more properties of the media data stream, a group of two or more available versions of said property of the media data stream,
wherein the processor (110, 120; 710) of the device (110, 120; 710) is configured to select, for each of the one or more properties, one of the two or more available versions of said property as a selected version of said property, to determine further context information comprising the selected version of each of the one or more properties,
wherein the interface (111, 121; 711) of the device is configured to request said another plurality of segments of the media data stream depending on the further context information, and
wherein the interface (111, 121; 711) of the device (110, 120; 710) is configured to transmit said information further context information and information on a further replay offset or on the segment being rendered last by the device (110, 120; 710) or on the segment being received last by the device (110, 120; 710), wherein the further replay offset depends on a replay of the media data stream at the device (110, 120; 710).

11. A method, comprising:
transmitting manifest information to a first device, wherein the manifest information indicates, for each property of one or more properties of the media data stream, a group of two or more available versions of said property of the media data stream,
conducting a selection at the first device such that, for each of the one or more properties, one of the two or more available versions of said property are selected as a selected version of said property, to determine context information comprising the selected version of each of the one or more properties,
requesting by the first device a first plurality of segments of the media data stream depending on the context information,
transmitting said first plurality of segments from a server to the first device,
transmitting from the first device to a second device the context information and information on a replay offset or on a segment being rendered last by the first device or on a segment being received last by the first device, wherein the replay offset depends on a replay of the media data stream at the first device,
conducting a selection by the second device, such that a second plurality of segments of the media data stream is selected depending on the context information, and depending on the replay offset or on the segment being rendered last by the first device or on the segment being received last by the first device,
transmitting a request for said second plurality of segments from the second device to the server, and
transmitting said second plurality of segments from the server to the second device.

12. A method for receiving a plurality of segments of a media data stream, comprising:
receiving, at a first device, context information comprising the version of each of one or more properties of the media data stream selected by another device and information on a replay offset or on a segment being rendered last by said another device or on a segment being received last by the other device, wherein the replay offset depends on a replay of the media data stream at a second device,
selecting at the first device said plurality of segments of the media data stream depending on the context information, and depending on the replay offset or on the segment being rendered last by the other device or on the segment being received last by the other device,
requesting said plurality of segments, and
receiving said plurality of segments,
receiving, at the first device, manifest information indicating, for each property of one or more properties of the media data stream, a group of two or more available versions of said property of the media data stream,
selecting, at the first device, for each of the one or more properties, one of the two or more available versions of said property as a selected version of said property, to determine further context information comprising the selected version of each of the one or more properties,
requesting, by the first device, said another plurality of segments of the media data stream depending on the further context information, and
transmitting, by the first device, the further context information and information on a further replay offset or on the segment being rendered last by the first device or on the segment being received last by the first device, wherein the further replay offset depends on a replay of the media data stream at the first device.

13. A computer program for implementing the method of one of claims 11 and 12 when being executed on a computer or signal processor.

## Patentansprüche

1. Ein System, das folgende Merkmale aufweist:
einen Server (130; 810),
eine erste Vorrichtung (110; 710) zum Empfangen einer ersten Mehrzahl von Segmenten eines Mediendatenstroms von dem Server (130; 810), und
eine zweite Vorrichtung (120; 710) zum Empfangen einer zweiten Mehrzahl von Segmenten des Mediendatenstroms von dem Server (130; 810),
wobei eine Schnittstelle (111; 711) der ersten Vorrichtung (110; 710) dazu ausgebildet ist, Manifestinformationen zu empfangen, die für jede Eigenschaft einer oder mehrerer Eigenschaften des Mediendatenstroms eine Gruppe von zwei oder mehr verfügbaren Versionen der Eigenschaft des Mediendatenstroms angeben,
wobei ein Prozessor (112; 712) der ersten Vorrichtung (110; 710) dazu ausgebildet ist, für jede der einen oder mehreren Eigenschaften eine der zwei oder mehr verfügbaren Versionen der Eigenschaft als ausgewählte Version der Eigenschaft auszuwählen, um Kontextinformationen zu bestimmen, die die ausgewählte Version jeder der einen oder mehreren Eigenschaften aufweisen,
wobei die Schnittstelle (111; 711) der ersten Vorrichtung (110; 710) dazu ausgebildet ist, die erste Mehrzahl von Segmenten des Mediendatenstroms in Abhängigkeit der Kontextinformationen anzufordern,
wobei der Server (130; 810) dazu ausgebildet ist, die erste Mehrzahl von Segmenten an die erste Vorrichtung (110; 710) zu übertragen,
wobei eine Schnittstelle (121; 711) der zweiten Vorrichtung (120; 710) dazu ausgebildet ist, die Kontextinformationen sowie Informationen über einen Wiedergabeversatz oder über ein von der ersten Vorrichtung (110; 710) zuletzt gerendertes Segment oder über ein von der ersten Vorrichtung (110; 710) zuletzt empfangenes Segment zu empfangen, wobei der Wiedergabeversatz von einer Wiedergabe des Mediendatenstroms an der ersten Vorrichtung (110; 710) abhängt,
wobei ein Prozessor (122; 712) der zweiten Vorrichtung (120; 710) dazu ausgebildet ist, die zweite Mehrzahl von Segmenten des Mediendatenstroms in Abhängigkeit der Kontextinformationen und in Abhängigkeit des Wiedergabeversatzes oder des von der ersten Vorrichtung (110; 710) zuletzt gerenderten Segmentes oder des von der ersten Vorrichtung (110; 710) zuletzt empfangenen Segmentes auszuwählen,
wobei die Schnittstelle (121; 711) der zweiten Vorrichtung (120; 710) dazu ausgebildet ist, die zweite Mehrzahl von Segmenten von dem Server (130; 810) anzufordern, und
wobei der Server (130; 810) dazu ausgebildet ist, die zweite Mehrzahl von Segmenten an die zweite Vorrichtung (120; 710) zu übertragen.

2. Ein System gemäß Anspruch 1,
wobei die Schnittstelle (111; 711) der ersten Vorrichtung (110; 710) dazu ausgebildet ist, die erste Mehrzahl von Segmenten des Mediendatenstroms in Abhängigkeit der Kontextinformationen anzufordern, indem eine erste Nachricht übertragen wird, die die Kontextinformationen und eine erste Angabe eines ersten Segments der ersten Mehrzahl von Segmenten aufweist, und indem eine zweite Nachricht übertragen wird, die die Kontextinformationen und eine zweite Angabe eines zweiten Segments der ersten Mehrzahl von Segmenten aufweist,
wobei der Server (130; 810) dazu ausgebildet ist, die erste Mehrzahl von Segmenten an die erste Vorrichtung (110; 710) zu übertragen, indem das erste Segment der ersten Mehrzahl von Segmenten an die erste Vorrichtung (110; 710) übertragen wird, wenn der Server (130; 810) die erste Nachricht empfängt, und indem das zweite Segment der ersten Mehrzahl von Segmenten an die erste Vorrichtung (110; 710) übertragen wird, wenn der Server (130; 810) die zweite Nachricht empfängt,
wobei die Schnittstelle (121; 711) der zweiten Vorrichtung (120; 710) dazu ausgebildet ist, die zweite Mehrzahl von Segmenten des Mediendatenstroms in Abhängigkeit der Kontextinformationen anzufordern, indem eine dritte Nachricht übertragen wird, die die Kontextinformationen und eine dritte Angabe eines dritten Segments der zweiten Mehrzahl von Segmenten aufweist, und indem eine vierte Nachricht übertragen wird, die die Kontextinformationen und eine vierte Angabe eines vierten Segments der zweiten Mehrzahl von Segmenten aufweist,
wobei der Server (130; 810) dazu ausgebildet ist, die zweite Mehrzahl von Segmenten an die zweite Vorrichtung (120; 710) zu übertragen, indem das dritte Segment der zweiten Mehrzahl von Segmenten an die zweite Vorrichtung (120; 710) übertragen wird, wenn der Server (130; 810) die dritte Nachricht empfängt, und indem das vierte Segment der zweiten Mehrzahl von Segmenten an die zweite Vorrichtung (120; 710) übertragen wird, wenn der Server (130; 810) die vierte Nachricht empfängt.

3. Ein System gemäß Anspruch 1 oder 2, wobei die Segmente des Datenstroms sortiert sind, und wobei der Prozessor (122; 712) der zweiten Vorrichtung (120; 710) dazu ausgebildet ist, die zweite Mehrzahl von Segmenten des Mediendatenstroms in Abhängigkeit des Wiedergabeversatzes oder des von der ersten Vorrichtung (110; 710) zuletzt gerenderten Segmentes oder des von der ersten Vorrichtung (110; 710) zuletzt empfangenen Segmentes auszuwählen, so dass jedes von dem Prozessor (122; 712) der zweiten Vorrichtung (120; 710) ausgewählte der zweiten Mehrzahl von Segmenten das von der ersten Vorrichtung (110; 710) zuletzt gerenderte Segment ist oder ein Nachfolger des von der ersten Vorrichtung (110; 710) zuletzt gerenderten Segments ist oder das von der ersten Vorrichtung (110; 710) zuletzt empfangene Segment ist oder ein Nachfolger des von der ersten Vorrichtung (110; 710) zuletzt empfangenen Segments ist.

4. Ein System gemäß einem der vorhergehenden Ansprüche,
wobei die Schnittstelle (111; 711) der ersten Vorrichtung (110; 710) dazu ausgebildet ist, die Manifestinformationen als empfangene Manifestinformationen zu empfangen, wobei die empfangenen Manifestinformationen für jede Eigenschaft der einen oder mehreren Eigenschaften des Datenstroms die Gruppe von zwei oder mehr verfügbaren Versionen der Eigenschaft des Datenstroms angeben,
wobei die Schnittstelle (111; 711) der ersten Vorrichtung (110; 710) dazu ausgebildet ist, die empfangenen Manifestinformationen so zu modifizieren, um modifizierte Manifestinformationen zu erhalten, dass die modifizierten Manifestinformationen die Kontextinformationen und die Informationen über den Wiedergabeversatz und die Informationen über das von der ersten Vorrichtung (110; 710) zuletzt gerenderte Segment und/oder die Informationen über das von der ersten Vorrichtung (110; 710) zuletzt empfangene Segment angeben, indem die modifizierten Manifestinformationen empfangen werden,
wobei die Schnittstelle (121; 711) der zweiten Vorrichtung (120; 710) dazu ausgebildet ist, die Kontextinformationen und die Informationen über den Wiedergabeversatz und die Informationen über das von der ersten Vorrichtung (110; 710) zuletzt gerenderte Segment und/oder die Informationen über das von der ersten Vorrichtung (110; 710) zuletzt empfangene Segment zu empfangen, indem die modifizierten Manifestinformationen empfangen werden.

5. Ein System gemäß Anspruch 4,
wobei der Prozessor (112; 712) der ersten Vorrichtung (110; 710) dazu ausgebildet ist, die empfangenen Manifestinformationen so zu modifizieren, um modifizierte Manifestinformationen zu erhalten, dass die modifizierten Manifestinformationen für jede Eigenschaft der einen oder mehreren Eigenschaften des Datenstroms eine oder mehrere verfügbare Versionen der Gruppe von zwei oder mehr verfügbaren Versionen der Eigenschaft des Datenstroms angeben, dass die ausgewählte Version der Eigenschaft unter der einen oder den mehreren verfügbaren Versionen ist, die von den modifizierten Manifestinformationen für die Eigenschaft angegeben werden, und dass die modifizierten Manifestinformationen für eine Eigenschaft der einen oder mehreren Eigenschaften des Datenstroms genau eine verfügbare Version der Gruppe von zwei oder mehr verfügbaren Versionen der Eigenschaft des Datenstroms angeben, wobei die genau eine verfügbare Version der Eigenschaft, die ausgewählte Version der Eigenschaft der Kontextinformationen ist,
wobei die Schnittstelle (111; 711) der ersten Vorrichtung (110; 710) dazu ausgebildet ist, die modifizierten Manifestinformationen an die zweite Vorrichtung (120; 710) zu übertragen, und
wobei die Schnittstelle (121; 711) der zweiten Vorrichtung (120; 710) dazu ausgebildet ist, die Kontextinformationen zu empfangen, indem die modifizierten Manifestinformationen von der ersten Vorrichtung (110; 710) empfangen werden.

6. Ein System gemäß Anspruch 4 oder 5,
wobei die Schnittstelle (121; 711) der zweiten Vorrichtung (120; 710) dazu ausgebildet ist, die Kontextinformationen und die Informationen über den Wiedergabeversatz und die Informationen über das von der ersten Vorrichtung (110; 710) zuletzt gerenderte Segment und/oder die Informationen über das von der ersten Vorrichtung (110; 710) zuletzt empfangene Segment zu empfangen, indem die modifizierten Manifestinformationen empfangen werden,
wobei die modifizierten Manifestinformationen eine Mehrzahl von gekennzeichneten Informationselementen aufweisen, wobei eine Eigenschaft jedes der Mehrzahl von gekennzeichneten Informationselementen durch eine Anfangskennzeichnung und durch eine der Anfangskennzeichnung zugeordnete Endkennzeichnung charakterisiert sind,
wobei der Prozessor (122; 712) der zweiten Vorrichtung (120; 710) dazu ausgebildet ist, die Anfangskennzeichnung und/oder die Endkennzeichnung zumindest eines der gekennzeichneten Informationselemente der modifizierten Manifestinformationen zu analysieren, um zu bestimmen, ob der Prozessor (122; 712) der zweiten Vorrichtung (120; 710) dazu angepasst ist, das gekennzeichnete Informationselement zu interpretieren,
wobei der Prozessor (122; 712) der zweiten Vorrichtung (120; 710) dazu ausgebildet ist, zumindest eines der zweiten Mehrzahl von Segmenten des Mediendatenstroms in Abhängigkeit des gekennzeichneten Informationselementes auszuwählen, wenn der Prozessor (122; 712) der zweiten Vorrichtung (120; 710) dazu angepasst ist, das gekennzeichnete Informationselement zu interpretieren, und
wobei der Prozessor (122; 712) der zweiten Vorrichtung (120; 710) dazu ausgebildet ist, keines der zweiten Mehrzahl von Segmenten des Mediendatenstroms in Abhängigkeit des gekennzeichneten Informationselementes auszuwählen, wenn der Prozessor (122; 712) der zweiten Vorrichtung (120; 710) nicht dazu angepasst ist, das gekennzeichnete Informationselement zu interpretieren.

7. Ein System gemäß einem der Ansprüche 1 bis 3,
wobei der Prozessor (112; 712) der ersten Vorrichtung (110; 710) dazu ausgebildet ist, einen HTTP-Cookie zu erzeugen, der die Kontextinformationen und die Informationen über den Wiedergabeversatz oder über das von der ersten Vorrichtung (110; 710) zuletzt gerenderte Segment oder über das von der ersten Vorrichtung (110; 710) zuletzt empfangene Segment aufweist,
wobei die Schnittstelle (111; 711) der ersten Vorrichtung (110; 710) dazu ausgebildet ist, den HTTP-Cookie an die zweite Vorrichtung (120; 710) oder an den Server (130; 810) zu übertragen,
wobei der Server (130; 810) dazu ausgebildet ist, den HTTP-Cookie zu empfangen,
wobei die Manifestinformationen anfängliche Manifestinformationen sind, und wobei der Server (130; 810) dazu ausgebildet ist, die anfänglichen Manifestinformationen so zu modifizieren, um modifizierte Manifestinformationen in Abhängigkeit des HTTP-Cookies zu erhalten, dass die modifizierten Manifestinformationen die Kontextinformationen und die Informationen über den Wiedergabeversatz und die Informationen über das von der ersten Vorrichtung (110; 710) zuletzt gerenderte Segment und/oder die Informationen über das von der ersten Vorrichtung (110; 710) zuletzt empfangene Segment angeben, indem die modifizierten Manifestinformationen empfangen werden, und
wobei die Schnittstelle (121; 711) der zweiten Vorrichtung (120; 710) dazu ausgebildet ist, die Kontextinformationen und die Informationen über den Wiedergabeversatz und die Informationen über das von der ersten Vorrichtung (110; 710) zuletzt gerenderte Segment und/oder die Informationen über das von der ersten Vorrichtung (110; 710) zuletzt empfangene Segment zu empfangen, indem die modifizierten Manifestinformationen von dem Server (130; 810) empfangen werden.

8. Ein System gemäß einem der Ansprüche 1 bis 3,
wobei der Prozessor (112; 712) der ersten Vorrichtung (110; 710) dazu ausgebildet ist, eine oder mehrere Kopfzeilen einer Nachricht zu erzeugen, wobei die eine oder die mehreren Kopfzeilen die Kontextinformationen und die Informationen über den Wiedergabeversatz oder über das von der ersten Vorrichtung (110; 710) zuletzt gerenderte Segment oder über das von der ersten Vorrichtung (110; 710) zuletzt empfangene Segment aufweisen,
wobei die Schnittstelle (111; 711) der ersten Vorrichtung (110; 710) dazu ausgebildet ist, die eine oder die mehreren Kopfzeilen an die zweite Vorrichtung (120; 710) oder an den Server (130; 810) zu übertragen,
wobei der Server (130; 810) dazu ausgebildet ist, die eine oder die mehreren Kopfzeilen zu empfangen,
wobei die Manifestinformationen anfängliche Manifestinformationen sind, und wobei der Server (130; 810) dazu ausgebildet ist, die anfänglichen Manifestinformationen so zu modifizieren, um modifizierte Manifestinformationen in Abhängigkeit der einen oder der mehreren Kopfzeilen zu erhalten, dass die modifizierten Manifestinformationen die Kontextinformationen und die Informationen über den Wiedergabeversatz und die Informationen über das von der ersten Vorrichtung (110; 710) zuletzt gerenderte Segment und/oder die Informationen über das von der ersten Vorrichtung (110; 710) zuletzt empfangene Segment angeben, indem die modifizierten Manifestinformationen empfangen werden, und
wobei die Schnittstelle (121; 711) der zweiten Vorrichtung (120; 710) dazu ausgebildet ist, die Kontextinformationen und die Informationen über den Wiedergabeversatz und die Informationen über das von der ersten Vorrichtung (110; 710) zuletzt gerenderte Segment und/oder die Informationen über das von der ersten Vorrichtung (110; 710) zuletzt empfangene Segment zu empfangen, indem die modifizierten Manifestinformationen von dem Server (130; 810) empfangen werden.

9. Ein System gemäß einem der vorhergehenden Ansprüche,
wobei der Mediendatenstrom ein erster Mediendatenstrom ist,
wobei die erste Vorrichtung (110; 710) dazu ausgebildet ist, eine dritte Mehrzahl von Segmenten des zweiten Mediendatenstroms von dem Server (130; 810) zu empfangen,
wobei die zweite Vorrichtung (120; 710) dazu ausgebildet ist, eine vierte Mehrzahl von Segmenten des zweiten Mediendatenstroms von dem Server (130; 810) zu empfangen,
wobei die Schnittstelle (111; 711) der ersten Vorrichtung (110; 710) dazu ausgebildet ist, Manifestinformationen zu empfangen, die für jede Eigenschaft einer oder mehrerer Eigenschaften des zweiten Mediendatenstroms eine Gruppe von zwei oder mehr verfügbaren Versionen der Eigenschaft des zweiten Mediendatenstroms angeben,
wobei der Prozessor (112; 712) der ersten Vorrichtung (110; 710) dazu ausgebildet ist, für jede der einen oder mehreren Eigenschaften des zweiten Mediendatenstroms eine der zwei oder mehr verfügbaren Versionen der Eigenschaft als ausgewählte Version der Eigenschaft des zweiten Mediendatenstroms auszuwählen, um die Kontextinformationen zu bestimmen, wobei die Kontextinformationen ferner die ausgewählte Version jeder der einen oder der mehreren Eigenschaften des zweiten Mediendatenstroms aufweisen,
wobei die Schnittstelle (111; 711) der ersten Vorrichtung (110; 710) dazu ausgebildet ist, die dritte Mehrzahl von Segmenten des zweiten Mediendatenstroms in Abhängigkeit der Kontextinformationen anzufordern,
wobei der Server (130; 810) dazu ausgebildet ist, die dritte Mehrzahl von Segmenten an die erste Vorrichtung (110; 710) zu übertragen,
wobei die Schnittstelle (121; 711) der zweiten Vorrichtung (120; 710) dazu ausgebildet ist, ferner Informationen über einen weiteren Wiedergabeversatz oder über das von der ersten Vorrichtung (110; 710) zuletzt gerenderte Segment des zweiten Mediendatenstroms oder über das von der ersten Vorrichtung (110; 710) zuletzt empfangene Segment des zweiten Mediendatenstroms zu empfangen, wobei der weitere Wiedergabeversatz von einer Wiedergabe des zweiten Mediendatenstroms an der ersten Vorrichtung (110; 710) abhängt,
wobei der Prozessor (122; 712) der zweiten Vorrichtung (120; 710) dazu ausgebildet ist, die vierte Mehrzahl von Segmenten des zweiten Mediendatenstroms in Abhängigkeit der Kontextinformationen und in Abhängigkeit des weiteren Wiedergabeversatzes oder des von der ersten Vorrichtung (110; 710) zuletzt gerenderten Segmentes des zweiten Mediendatenstroms oder des von der ersten Vorrichtung (110; 710) zuletzt empfangenen Segmentes des zweiten Mediendatenstroms auszuwählen,
wobei die Schnittstelle (121; 711) der zweiten Vorrichtung (120; 710) dazu ausgebildet ist, die vierte Mehrzahl von Segmenten von dem Server (130; 810) anzufordern, und
wobei der Server (130; 810) dazu ausgebildet ist, die vierte Mehrzahl von Segmenten an die zweite Vorrichtung (120; 710) zu übertragen.

10. Eine Vorrichtung (110, 120; 710) zum Empfangen einer Mehrzahl von Segmenten eines Mediendatenstroms, die folgende Merkmale aufweist:
eine Schnittstelle (111, 121; 711) zum Empfangen von Kontextinformationen, die die durch eine andere Vorrichtung ausgewählte Version jeder von einer oder mehreren Eigenschaften des Mediendatenstroms aufweist, und Informationen über einen Wiedergabeversatz oder über ein von der anderen Vorrichtung zuletzt gerendertes Segment oder über ein von der anderen Vorrichtung zuletzt empfangenes Segment, wobei der Wiedergabeversatz von einer Wiedergabe des Mediendatenstroms an der anderen Vorrichtung abhängt, und
einen Prozessor (112, 122; 712) zum Auswählen der Mehrzahl von Segmenten des Mediendatenstroms in Abhängigkeit der Kontextinformationen und in Abhängigkeit des Wiedergabeversatzes oder des von der anderen Vorrichtung zuletzt gerenderten Segmentes oder des von der anderen Vorrichtung zuletzt empfangenen Segmentes,
wobei die Schnittstelle (111, 121; 711) dazu ausgebildet ist, die Mehrzahl von Segmenten anzufordern, und
wobei die Schnittstelle (111, 121; 711) dazu ausgebildet ist, die Mehrzahl von Segmenten zu empfangen,
wobei die Schnittstelle (111, 121; 711) der Vorrichtung (110, 120; 710) dazu ausgebildet ist, Manifestinformationen zu empfangen, die für jede Eigenschaft einer oder mehrerer Eigenschaften des Mediendatenstroms eine Gruppe von zwei oder mehr verfügbaren Versionen der Eigenschaft des Mediendatenstroms angeben,
wobei der Prozessor (110, 120; 710) der Vorrichtung (110, 120; 710) dazu ausgebildet ist, für jede der einen oder mehreren Eigenschaften eine der zwei oder mehr verfügbaren Versionen der Eigenschaft als ausgewählte Version der Eigenschaft auszuwählen, um weitere Kontextinformationen zu bestimmen, die die ausgewählte Version jeder der einen oder mehreren Eigenschaften aufweisen,
wobei die Schnittstelle (111, 121; 711) der Vorrichtung dazu ausgebildet ist, die andere Mehrzahl von Segmenten des Mediendatenstroms in Abhängigkeit der weiteren Kontextinformationen anzufordern, und
wobei die Schnittstelle (111, 121; 711) der Vorrichtung (110, 120; 710) dazu ausgebildet ist, die weiteren Kontextinformationen und Informationen über einen weiteren Wiedergabeversatz oder über das von der Vorrichtung (110, 120; 710) zuletzt gerenderte Segment oder über das von der Vorrichtung (110, 120; 710) zuletzt empfangene Segment zu übertragen, wobei der weitere Wiedergabeversatz von einer Wiedergabe des Mediendatenstroms an der Vorrichtung (110,120; 710) abhängt.

11. Ein Verfahren, das folgende Schritte aufweist:
Übertragen von Manifestinformationen an eine erste Vorrichtung, wobei die Manifestinformationen für jede Eigenschaft einer oder mehrerer Eigenschaften des Mediendatenstroms eine Gruppe von zwei oder mehr verfügbaren Versionen der Eigenschaft des Mediendatenstroms angeben,
Ausführen einer Auswahl an der ersten Vorrichtung derart, dass für jede der einen oder mehreren Eigenschaften eine der zwei oder mehr verfügbaren Versionen der Eigenschaft als ausgewählte Version der Eigenschaft ausgewählt wird, um Kontextinformationen zu bestimmen, die die ausgewählte Version jeder der einen oder mehreren Eigenschaften aufweisen,
Anfordern, durch die erste Vorrichtung, einer ersten Mehrzahl von Segmenten des Mediendatenstroms in Abhängigkeit der Kontextinformationen,
Übertragen der ersten Mehrzahl von Segmenten von einem Server an die erste Vorrichtung,
Übertragen, von der ersten Vorrichtung an eine zweite Vorrichtung, der Kontextinformationen sowie Informationen über einen Wiedergabeversatz oder über ein von der ersten Vorrichtung zuletzt gerendertes Segment oder über ein von der ersten Vorrichtung zuletzt empfangenes Segment, wobei der Wiedergabeversatz von einer Wiedergabe des Mediendatenstroms an der ersten Vorrichtung abhängt,
Ausführen einer Auswahl durch die zweite Vorrichtung derart, dass eine zweite Mehrzahl von Segmenten des Mediendatenstroms in Abhängigkeit der Kontextinformationen und in Abhängigkeit des Wiedergabeversatzes oder des von der ersten Vorrichtung zuletzt gerenderten Segmentes oder des von der ersten Vorrichtung zuletzt empfangenen Segmentes ausgewählt wird,
Übertragen einer Anforderung für die zweite Mehrzahl von Segmenten von der zweiten Vorrichtung an den Server, und
Übertragen der zweiten Mehrzahl von Segmenten von dem Server an die zweite Vorrichtung.

12. Ein Verfahren zum Empfangen einer Mehrzahl von Segmenten eines Mediendatenstroms, das folgende Schritte aufweist:
Empfangen, an einer ersten Vorrichtung, von Kontextinformationen, die die durch eine andere Vorrichtung ausgewählte Version jeder von einer oder mehreren Eigenschaften des Mediendatenstroms aufweist, und Informationen über einen Wiedergabeversatz oder über ein von der anderen Vorrichtung zuletzt gerendertes Segment oder über ein von der anderen Vorrichtung zuletzt empfangenes Segment, wobei der Wiedergabeversatz von einer Wiedergabe des Mediendatenstroms an einer zweiten Vorrichtung abhängt, und
Auswählen, an der ersten Vorrichtung, der Mehrzahl von Segmenten des Mediendatenstroms in Abhängigkeit der Kontextinformationen und in Abhängigkeit des Wiedergabeversatzes oder des von der anderen Vorrichtung zuletzt gerenderten Segmentes oder des von der anderen Vorrichtung zuletzt empfangenen Segmentes,
Anfordern der Mehrzahl von Segmenten, und
Empfangen der Mehrzahl von Segmenten,
Empfangen, an der ersten Vorrichtung, von Manifestinformationen, die für jede Eigenschaft einer oder mehrerer Eigenschaften des Mediendatenstroms eine Gruppe von zwei oder mehr verfügbaren Versionen der Eigenschaft des Mediendatenstroms angeben,
Auswählen, an der ersten Vorrichtung, für jede der einen oder mehreren Eigenschaften eine der zwei oder mehr verfügbaren Versionen der Eigenschaft als ausgewählte Version der Eigenschaft, um weitere Kontextinformationen zu bestimmen, die die ausgewählte Version jeder der einen oder mehreren Eigenschaften aufweisen,
Anfordern, durch die erste Vorrichtung, der anderen Mehrzahl von Segmenten des Mediendatenstroms in Abhängigkeit der weiteren Kontextinformationen, und
Übertragen, durch die erste Vorrichtung, der weiteren Kontextinformationen und Informationen über einen weiteren Wiedergabeversatz oder über das von der ersten Vorrichtung zuletzt gerenderte Segment oder über das von der ersten Vorrichtung zuletzt empfangene Segment, wobei der weitere Wiedergabeversatz von einer Wiedergabe des Mediendatenstroms an der ersten Vorrichtung abhängt.

13. Ein Computerprogramm zum Implementieren des Verfahrens gemäß einem der Ansprüche 11 und 12, wenn dasselbe auf einem Computer oder Signalprozessor ausgeführt wird.

## Revendications

1. Système, comprenant:
un serveur (130; 810),
un premier dispositif (110; 710) destiné à recevoir une première pluralité de segments d'un flux de données multimédia du serveur (130; 810), et
un deuxième dispositif (120; 710) destiné à recevoir une deuxième pluralité de segments du flux de données multimédia du serveur (130; 810),
dans lequel une interface (111; 711) du premier dispositif (110; 710) est configurée pour recevoir des informations détaillées indiquant, pour chaque propriété parmi les une ou plusieurs propriétés du flux de données multimédia, un groupe de deux ou plusieurs versions disponibles de ladite propriété du flux de données multimédia,
dans lequel un processeur (112; 712) du premier dispositif (110; 710) est configuré pour sélectionner, pour chacune des une ou plusieurs propriétés, une des deux ou plusieurs versions disponibles de ladite propriété comme version sélectionnée de ladite propriété, pour déterminer les informations de contexte comprenant la version sélectionnée de chacune des une ou plusieurs propriétés,
dans lequel l'interface (111; 711) du premier dispositif (110; 710) est configurée pour demander ladite première pluralité de segments du flux de données multimédia en fonction des informations de contexte,
dans lequel le serveur (130; 810) est configuré pour transmettre ladite première pluralité de segments au premier dispositif (110; 710),
dans lequel une interface (121; 711) du deuxième dispositif (120; 710) est configurée pour recevoir les informations de contexte et les informations sur un décalage de reproduction ou sur un segment rendu en dernier lieu par le premier dispositif (110; 710) ou sur un segment reçu en dernier lieu par le premier dispositif (110; 710), dans lequel le décalage de reproduction dépend d'une reproduction du flux de données multimédia au premier dispositif (110; 710),
dans lequel un processeur (122; 712) du deuxième dispositif (120; 710) est configuré pour sélectionner ladite deuxième pluralité de segments du flux de données multimédia en fonction des informations de contexte, et en fonction du décalage de reproduction ou du segment rendu en dernier lieu par le premier dispositif (110; 710) ou du dernier segment reçu par le premier dispositif (110; 710),
dans lequel l'interface (121; 711) du deuxième dispositif (120; 710) est configurée pour demander ladite deuxième pluralité de segments au serveur (130; 810), et
dans lequel le serveur (130; 810) est configuré pour transmettre ladite deuxième pluralité de segments au deuxième dispositif (120; 710).

2. Système selon la revendication 1,
dans lequel l'interface (111; 711) du premier dispositif (110; 710) est configurée pour demander ladite première pluralité de segments du flux de données multimédia en fonction des informations de contexte, en transmettant un premier message comprenant les informations de contexte et une première indication d'un premier segment de la première pluralité de segments, et en transmettant un deuxième message comprenant les informations de contexte et une deuxième indication d'un deuxième segment de la première pluralité de segments,
dans lequel le serveur (130; 810) est configuré pour transmettre ladite première pluralité de segments au premier dispositif (110; 710), en transmettant le premier segment de la première pluralité de segments au premier dispositif (110; 710) lorsque le serveur (130; 810) reçoit ledit premier message, et en transmettant le deuxième segment de la première pluralité de segments au premier dispositif (110; 710) lorsque le serveur (130; 810) reçoit ledit deuxième message,
dans lequel l'interface (121; 711) du deuxième dispositif (120; 710) est configurée pour demander ladite deuxième pluralité de segments du flux de données multimédia en fonction des informations de contexte, en transmettant un troisième message comprenant les informations de contexte et une troisième indication d'un troisième segment de la deuxième pluralité de segments, et en transmettant un quatrième message comprenant les informations de contexte et une quatrième indication d'un quatrième segment de la deuxième pluralité de segments, et
dans lequel le serveur (130; 810) est configuré pour transmettre ladite deuxième pluralité de segments au deuxième dispositif (120; 710), en transmettant le troisième segment de la deuxième pluralité de segments au deuxième dispositif (120; 710) lorsque le serveur (130; 810) reçoit ledit troisième message, et en transmettant le quatrième segment de la deuxième pluralité de segments au deuxième dispositif (120; 710) lorsque le serveur (130; 810) reçoit ledit quatrième message.

3. Système selon la revendication 1 ou 2, dans lequel les segments du flux de données sont ordonnés, et dans lequel le processeur (122; 712) du deuxième dispositif (120; 710) est configuré pour sélectionner ladite deuxième pluralité de segments du flux de données multimédia en fonction du décalage de reproduction ou du segment rendu en dernier lieu par le premier dispositif (110; 710) ou du segment reçu en dernier lieu par le premier dispositif (110; 710), de sorte que chacun de ladite deuxième pluralité de segments sélectionné par le processeur (122; 712) du deuxième dispositif (120; 710) soit le segment rendu en dernier lieu par le premier dispositif (110; 710) ou un successeur du segment rendu en dernier lieu par le premier dispositif (110; 710) ou le segment reçu en dernier lieu par le premier dispositif (110; 710) ou un successeur du segment reçu en dernier lieu par le premier dispositif (110; 710).

4. Système selon l'une des revendications précédentes,
dans lequel l'interface (111; 711) du premier dispositif (110; 710) est configurée pour recevoir les informations détaillées comme informations détaillées reçues, lesdites informations détaillées reçues indiquant, pour chaque propriété des une ou plusieurs propriétés dudit flux de données, le groupe de deux ou plusieurs versions disponibles de ladite propriété du flux de données,
dans lequel l'interface (111; 711) du premier dispositif (110; 710) est configurée pour modifier les informations détaillées reçues pour obtenir des informations détaillées modifiées, de sorte que lesdites informations détaillées modifiées indiquent au moins l'un parmi les informations de contexte et les informations sur le décalage de reproduction et les informations sur le segment rendu en dernier lieu par le premier dispositif (110; 710) et les informations sur le segment reçu en dernier lieu par le premier dispositif (110; 710), en recevant les informations détaillées modifiées,
dans lequel l'interface (121; 711) du deuxième dispositif (120; 710) est configurée pour recevoir au moins l'un parmi les informations de contexte et les informations sur le décalage de reproduction et les informations sur le segment rendu en dernier lieu par le premier dispositif (110 ; 710) et les informations sur le segment reçu en dernier lieu par le premier dispositif (110; 710), en recevant les informations détaillées modifiées.

5. Système selon la revendication 4,
dans lequel le processeur (112; 712) du premier dispositif (110; 710) est configuré pour modifier les informations détaillées reçues pour obtenir des informations détaillées modifiées, de sorte que lesdites informations détaillées modifiées indiquent, pour chaque propriété desdites une ou plusieurs propriétés dudit flux de données, une ou plusieurs versions disponibles dudit groupe de deux ou plusieurs versions disponibles de ladite propriété du flux de données, de sorte que la version sélectionnée de ladite propriété se trouve parmi les une ou plusieurs versions disponibles indiquées par les informations détaillées modifiées pour ladite propriété, et de sorte que lesdites informations détaillées modifiées indiquent, pour une propriété des une ou plusieurs propriétés dudit flux de données, exactement une version disponible du groupe de deux ou plusieurs versions disponibles de ladite propriété du flux de données, ladite exactement une version disponible de ladite propriété étant la version sélectionnée de ladite propriété des informations de contexte,
dans lequel l'interface (111; 711) du premier dispositif (110; 710) est configurée pour transmettre les informations détaillées modifiées au deuxième dispositif (120; 710), et
dans lequel l'interface (121; 711) du deuxième dispositif (120; 710) est configurée pour recevoir les informations de contexte en recevant les informations détaillées modifiées du premier dispositif (110; 710).

6. Système selon la revendication 4 ou 5,
dans lequel l'interface (121; 711) du deuxième dispositif (120; 710) est configurée pour recevoir au moins l'un parmi les informations de contexte et les informations sur le décalage de reproduction et les informations sur le segment rendu en dernier lieu par le premier dispositif (110 ; 710) et les informations sur le segment reçu en dernier lieu par le premier dispositif (110; 710), en recevant les informations détaillées modifiées,
dans lequel les informations détaillées modifiées comprennent une pluralité d'éléments d'information étiquetés, dans lequel une propriété de chacun de la pluralité d'éléments d'information étiquetés est **caractérisée par** une étiquette de début et par une étiquette de fin attribuée à ladite étiquette de début,
dans lequel le processeur (122; 712) du deuxième dispositif (120; 710) est configuré pour analyser l'au moins une parmi l'étiquette de début et l'étiquette de fin d'au moins un des éléments d'information étiquetés des informations détaillées modifiées pour déterminer si le processeur (122; 712) du deuxième dispositif (120; 710) est adapté pour interpréter ledit élément d'information étiqueté,
dans lequel le processeur (122; 712) du deuxième dispositif (120; 710) est configuré pour sélectionner au moins un de ladite deuxième pluralité de segments du flux de données multimédia en fonction dudit élément d'information étiqueté si le processeur (122; 712) du deuxième dispositif (120; 710) est adapté pour interpréter ledit élément d'information étiqueté, et
dans lequel le processeur (122; 712) du deuxième dispositif (120; 710) est configuré pour ne pas sélectionner l'un ou l'autre de ladite deuxième pluralité de segments du flux de données multimédia en fonction dudit élément d'information étiqueté si le processeur (122; 712) du deuxième dispositif (120; 710) n'est pas adapté pour interpréter ledit élément d'information étiqueté.

7. Système selon l'une des revendications 1 à 3,
dans lequel le processeur (112; 712) du premier dispositif (110; 710) est configuré pour générer un cookie HTTP comprenant les informations de contexte et les informations sur le décalage de reproduction ou sur le segment rendu en dernier lieu par le premier dispositif (110; 710) ou sur le segment reçu en dernier lieu par le premier dispositif (110; 710),
dans lequel l'interface (111; 711) du premier dispositif (110; 710) est configurée pour transmettre le cookie HTTP au deuxième dispositif (120; 710) ou au serveur (130; 810),
dans lequel le serveur (130; 810) est configuré pour recevoir le cookie HTTP,
dans lequel les informations détaillées sont des informations détaillées initiales, et dans lequel le serveur (130; 810) est configuré pour modifier les informations détaillées initiales pour obtenir des informations détaillées modifiées en fonction du cookie HTTP, de sorte que lesdites informations détaillées modifiées indiquent au moins l'un parmi les informations de contexte et les informations sur le décalage de reproduction et les informations sur le segment rendu en dernier lieu par le premier dispositif (110; 710) et les informations sur le segment reçu en dernier lieu par le premier dispositif (110; 710), en recevant les informations détaillées modifiées, et
dans lequel l'interface (121; 711) du deuxième dispositif (120; 710) est configurée pour recevoir au moins l'un parmi les informations de contexte et les informations sur le décalage de reproduction et les informations sur le segment rendu en dernier lieu par le premier dispositif (110 ; 710) et les informations sur le segment reçu en dernier lieu par le premier dispositif (110; 710), en recevant les informations détaillées modifiées du serveur (130; 810).

8. Système selon l'une des revendications 1 à 3,
dans lequel le processeur (112; 712) du premier dispositif (110; 710) est configuré pour générer un ou plusieurs en-têtes d'un message, lesdits un ou plusieurs en-têtes comprenant les informations de contexte et les informations sur le décalage de reproduction ou sur le segment rendu en dernier lieu par le premier dispositif (110; 710) ou sur le segment reçu en dernier lieu par le premier dispositif (110; 710),
dans lequel l'interface (111; 711) du premier dispositif (110; 710) est configurée pour transmettre les un ou plusieurs en-têtes au deuxième dispositif (120; 710) ou au serveur (130; 810),
dans lequel le serveur (130; 810) est configuré pour recevoir les un ou plusieurs en-têtes,
dans lequel les informations détaillées sont des informations détaillées initiales, et dans lequel le serveur (130; 810) est configuré pour modifier les informations détaillées initiales pour obtenir des informations détaillées modifiées en fonction des un ou plusieurs en-têtes, de sorte que lesdites informations détaillées modifiées indiquent au moins un parmi les informations de contexte et des informations sur le décalage de reproduction et des informations sur le segment rendu en dernier lieu par le premier dispositif (110; 710) et des informations sur le segment reçu en dernier lieu par le premier dispositif (110; 710), en recevant les informations détaillées modifiées, et
dans lequel l'interface (121; 711) du deuxième dispositif (120; 710) est configurée pour recevoir au moins un parmi les informations de contexte et les informations sur le décalage de reproduction et les informations sur le segment rendu en dernier lieu par le premier dispositif (110 ; 710) et les informations sur le segment reçu en dernier lieu par le premier dispositif (110; 710), en recevant les informations détaillées modifiées du serveur (130; 810).

9. Système selon l'une des revendications précédentes,
dans lequel le flux de données multimédia est un premier flux de données multimédia,
dans lequel le premier dispositif (110; 710) est configuré pour recevoir une troisième pluralité de segments du deuxième flux de données multimédia du serveur (130; 810),
dans lequel le deuxième dispositif (120; 710) est configuré pour recevoir une quatrième pluralité de segments du deuxième flux de données multimédia du serveur (130; 810),
dans lequel l'interface (111; 711) du premier dispositif (110; 710) est configurée pour recevoir les informations détaillées indiquant, pour chaque propriété des une ou plusieurs propriétés du deuxième flux de données multimédia, un groupe de deux ou plusieurs versions disponibles de ladite propriété du deuxième flux de données multimédia,
dans lequel le processeur (112; 712) du premier dispositif (110; 710) est configuré pour sélectionner, pour chacune des une ou plusieurs propriétés du deuxième flux de données multimédia, une des deux ou plusieurs versions disponibles de ladite propriété comme version sélectionnée de ladite propriété du deuxième flux de données multimédia, pour déterminer les informations de contexte, dans lequel les informations de contexte comprennent par ailleurs la version sélectionnée de chacune des une ou plusieurs propriétés du deuxième flux de données multimédia,
dans lequel l'interface (111; 711) du premier dispositif (110; 710) est configurée pour demander ladite troisième pluralité de segments du deuxième flux de données multimédia en fonction des informations de contexte,
dans lequel le serveur (130; 810) est configuré pour transmettre ladite troisième pluralité de segments au premier dispositif (110; 710),
dans lequel l'interface (121; 711) du deuxième dispositif (120; 710) est configurée pour recevoir par ailleurs les informations sur un autre décalage de reproduction ou sur le segment du deuxième flux de données multimédia rendu en dernier lieu par le premier dispositif (110; 710) ou sur le segment du deuxième flux de données multimédia reçu en dernier lieu par le premier dispositif (110; 710), dans lequel l'autre décalage de reproduction dépend d'une reproduction du deuxième flux de données multimédia au premier dispositif (110; 710),
dans lequel le processeur (122; 712) du deuxième dispositif (120; 710) est configuré pour sélectionner ladite quatrième pluralité de segments du deuxième flux de données multimédia en fonction des informations de contexte et en fonction de l'autre décalage de reproduction ou du segment du deuxième flux de données multimédia rendu en dernier lieu par le premier dispositif (110; 710) ou du segment du deuxième flux de données multimédia reçu en dernier lieu par le premier dispositif (110; 710),
dans lequel l'interface (121; 711) du deuxième dispositif (120; 710) est configurée pour demander ladite quatrième pluralité de segments au serveur (130; 810), et
dans lequel le serveur (130; 810) est configuré pour transmettre ladite quatrième pluralité de segments au deuxième dispositif (120; 710).

10. Dispositif (110, 120; 710) pour recevoir une pluralité de segments d'un flux de données multimédia, comprenant:
une interface (111, 121; 711) destinée à recevoir des informations de contexte comprenant la version de chacune des une ou plusieurs propriétés du flux de données multimédia sélectionné par un autre dispositif et des informations sur un décalage de reproduction ou sur un segment rendu en dernier lieu par ledit autre dispositif ou sur un segment reçu en dernier lieu par l'autre dispositif, dans lequel le décalage de reproduction dépend d'une reproduction du flux de données multimédia à l'autre dispositif, et un processeur (112, 122; 712) destiné à sélectionner ladite pluralité de segments du flux de données multimédia en fonction des informations de contexte et en fonction du décalage de reproduction ou du segment rendu en dernier lieu par l'autre dispositif ou du segment reçu en dernier lieu par l'autre dispositif,
dans lequel l'interface (111, 121; 711) est configurée pour demander ladite pluralité de segments, et
dans lequel l'interface (111, 121; 711) est configurée pour recevoir ladite pluralité de segments,
dans lequel l'interface (111, 121; 711) du dispositif (110, 120; 710) est configurée pour recevoir les informations détaillées indiquant, pour chaque propriété parmi les une ou plusieurs propriétés du flux de données multimédia, un groupe de deux ou plusieurs versions disponibles de ladite propriété du flux de données multimédia,
dans lequel le processeur (110, 120; 710) du dispositif (110, 120; 710) est configuré pour sélectionner, pour chacune des une ou plusieurs propriétés, l'une des deux ou plusieurs versions disponibles de ladite propriété comme version sélectionnée de ladite propriété, pour déterminer d'autres informations de contexte comprenant la version sélectionnée de chacune des une ou plusieurs propriétés,
dans lequel l'interface (111, 121; 711) du dispositif est configurée pour demander ladite autre pluralité de segments du flux de données multimédia en fonction des autres informations de contexte, et
dans lequel l'interface (111, 121; 711) du dispositif (110, 120; 710) est configurée pour transmettre lesdites autres informations de contexte et les informations sur un autre décalage de reproduction ou sur le segment rendu en dernier lieu par le dispositif (110, 120; 710) ou sur le segment reçu en dernier lieu par le dispositif (110, 120; 710), dans lequel l'autre décalage de reproduction dépend d'une reproduction du flux de données multimédia au dispositif (110, 120; 710).

11. Procédé, comprenant le fait de:
transmettre des informations détaillées à un premier dispositif, où les informations détaillées indiquent, pour chaque propriété parmi les une ou plusieurs propriétés du flux de données multimédia, un groupe de deux ou plusieurs versions disponibles de ladite propriété du flux de données multimédia,
effectuer une sélection au premier dispositif de sorte que, pour chacune des une ou plusieurs propriétés, une des deux ou plusieurs versions disponibles de ladite propriété soit sélectionnée comme version sélectionnée de ladite propriété, pour déterminer les informations de contexte comprenant la version sélectionnée de chacune des une ou plusieurs propriétés,
demander, par le premier dispositif, une première pluralité de segments du flux de données multimédia en fonction des informations de contexte,
transmettre ladite première pluralité de segments d'un serveur au premier dispositif,
transmettre du premier dispositif à un deuxième dispositif les informations de contexte et les informations sur un décalage de reproduction ou sur un segment rendu en dernier lieu par le premier dispositif ou sur un segment reçu en dernier lieu par le premier dispositif, où le décalage de reproduction dépend d'une reproduction du flux de données multimédia au premier dispositif,
effectuer une sélection, par le deuxième dispositif, de sorte qu'une deuxième pluralité de segments du flux de données multimédia soit sélectionnée en fonction des informations de contexte, et en fonction du décalage de reproduction ou du segment rendu en dernier lieu par le premier dispositif ou du segment reçu en dernier lieu par le premier dispositif,
transmettre une demande pour ladite deuxième pluralité de segments du deuxième dispositif au serveur, et
transmettre ladite deuxième pluralité de segments du serveur au deuxième dispositif.

12. Procédé pour recevoir une pluralité de segments d'un flux de données multimédia, comprenant le fait de:
recevoir, à un premier dispositif, les informations de contexte comprenant la version de chacune des une ou plusieurs propriétés du flux de données multimédia sélectionné par un autre dispositif et les informations sur un décalage de reproduction ou sur un segment rendu en dernier lieu par ledit autre dispositif ou sur un segment reçu en dernier lieu par l'autre dispositif, où le décalage de reproduction dépend d'une reproduction du flux de données multimédia à un deuxième dispositif,
sélectionner, au premier dispositif, ladite pluralité de segments du flux de données multimédia en. fonction des informations de contexte, et en fonction du décalage de reproduction ou du segment rendu en dernier lieu par l'autre dispositif ou du segment reçu en dernier lieu par l'autre dispositif,
demander ladite pluralité de segments, et
recevoir ladite pluralité de segments,
recevoir, au premier dispositif, les informations détaillées indiquant, pour chaque propriété des une ou plusieurs propriétés du flux de données multimédia, un groupe de deux ou plusieurs versions disponibles de ladite propriété du flux de données multimédia,
sélectionner, au premier dispositif, pour chacune des une ou plusieurs propriétés, une des deux ou plusieurs versions disponibles de ladite propriété comme version sélectionnée de ladite propriété, pour déterminer d'autres informations de contexte comprenant la version sélectionnée de chacune des une ou plusieurs propriétés,
demander, par le premier dispositif, ladite autre pluralité de segments du flux de données multimédia en fonction des autres informations de contexte, et
transmettre, par le premier dispositif, les autres informations de contexte et les informations sur un autre décalage de reproduction ou sur le segment rendu en dernier lieu par le premier dispositif ou sur le segment reçu en dernier lieu par le premier dispositif, où l'autre décalage de reproduction dépend d'une reproduction du flux de données multimédia au premier dispositif.

13. Programme d'ordinateur pour mettre en oeuvre le procédé selon l'une des revendications 11 et 12 lorsqu'il est exécuté sur un ordinateur ou un processeur de signal.
